# EUROPEAN PATENT APPLICATION

(11) **EP 4 346 301 A1**
(43) Date of publication of application: **03.04.2024**
(21) Application number: 22827098.9
(22) Date of filing: 28.03.2022
(51) Int. Cl.: H04W 72/02

(54) **COMMUNICATION METHOD AND DEVICE**

(30) Priority: 21.06.2021 CN 202110685208; 31.07.2021 CN 202110876778
(71) Applicant: Huawei Technologies Co., Ltd., Longgang Shenzhen, Guangdong 518129 (CN)
(72) Inventor: WANG, Bichai, Shenzhen, Guangdong 518129 (CN); ZHANG, Yanqing, Shenzhen, Guangdong 518129 (CN); LI, Xueru, Shenzhen, Guangdong 518129 (CN)
(74) Representative: Maiwald GmbH
(86) International application number: PCT/CN2022/083420
(87) International publication number: WO 2022/267593

(57) **Abstract**

This application relates to a communication method and device. A first terminal device sends first SCI in N first time units, where the first SCI indicates first configuration information, the first configuration information includes a resource of a first periodic transmission, the first periodic transmission includes M transmissions, a transmission cycle of the first periodic transmission is a first cycle, the M transmissions include P transmission time units, N is an integer greater than or equal to 1, M is an integer less than or equal to P, and P is an integer greater than N. The first terminal device sends, in N second time units, second SCI associated with the first SCI. The first terminal device does not need to send SCI for all transport blocks of a service of the first periodic transmission. For a second terminal device, a quantity of times of monitoring a control channel and decoding the SCI is reduced, so that power consumption of the second terminal device can be reduced. In addition, because a quantity of pieces of the SCI sent by the first terminal device is reduced, transmission overheads can also be reduced.

## Description

### CROSS-REFERENCE TO RELATED APPLICATIONS

This application claims priority to Chinese Patent Application No. 202110685208.1, filed with the China National Intellectual Property Administration on June 21, 2021 and entitled "COMMUNICATION METHOD, TERMINAL, AND NETWORK DEVICE", which is incorporated herein by reference in its entirety. This application claims priority to Chinese Patent Application No. 202110876778.9, filed with the China National Intellectual Property Administration on July 31, 2021 and entitled "COMMUNICATION METHOD AND DEVICE", which is incorporated herein by reference in its entirety.

### TECHNICAL FIELD

This application relates to the field of communication technologies, and in particular, to a communication method and device.

### BACKGROUND

There are two resource allocation modes in a sidelink (sidelink, SL) communication process. One is a network control mode, that is, an SL communication resource is scheduled by a network device. The other is a distributed mode, that is, user equipment (user equipment, UE) autonomously selects an SL communication resource from a preconfigured SL resource pool. In the distributed mode, when transmitting UE (transmitting UE, TX UE) needs to transmit data to receiving UE (receiving UE, RX UE), the TX UE may select an SL communication resource for transmission from the SL resource pool based on a resource sensing (resource sensing) process. Specifically, in the resource sensing process, the TX UE needs to perform, in a resource sensing window, blind detection on a physical sidelink control channel (physical sidelink control channel, PSCCH) of another TX UE, to select an SL communication resource that is not used by the another TX UE for transmission. In a further aspect, the RX UE needs to perform, in the SL resource pool, blind detection on a PSCCH of another UE, to determine whether there is data to be sent to the RX UE. In addition, the TX UE may also be RX UE for another UE. Therefore, the TX UE also needs to perform, in the SL resource pool, blind detection on a PSCCH of another UE, to determine whether there is data to be sent to the TX UE.

In an existing SL communication mechanism, the TX UE needs to send sidelink control information (sidelink control information, SCI) for each physical sidelink shared channel (physical sidelink shared channel, PSSCH). In one aspect, the SCI is used by another UE to perform interference avoidance during resource selection, and in a further aspect, the SCI is used by the RX UE to receive data (the RX UE needs to decode SCI associated with each PSSCH). However, for a periodic service, if parameters such as a cycle for sending a data packet by the TX UE and a data packet size are relatively fixed, most content of information included in SCI associated with a plurality of PSSCHs remains basically unchanged. In this case, the RX UE decodes the SCI associated with each PSSCH, and obtained information is relatively similar. It may be considered that the RX UE performs a redundant decoding process for a plurality of times, and the decoding process also causes relatively high power consumption.

### SUMMARY

Embodiments of this application provide a communication method and device, to reduce power consumption caused by decoding SCI by UE.

According to a first aspect, a communication method is provided. The method may be performed by a terminal device, or may be performed by a larger device including the terminal device, or may be performed by a chip system or another functional module. The chip system or the functional module can implement a function of the terminal device. The terminal device is, for example, referred to as a first terminal device. The method includes: sending first SCI in N first time units, where the first SCI indicates first configuration information, the first configuration information indicates a resource of a first periodic transmission, the resource of the first periodic transmission includes a time domain resource and/or a frequency domain resource, the first periodic transmission includes M transmissions, a transmission cycle of the first periodic transmission is a first cycle, the M transmissions correspond to P transmission time units, N is an integer greater than or equal to 1, M is an integer less than or equal to P, and P is an integer greater than N; and sending, in N second time units, second SCI associated with the first SCI, where the first SCI sent in the N first time units and the second SCI sent in the N second time units are used to schedule the M transmissions.

In this embodiment of this application, for example, a first periodic service (or referred to as the first periodic transmission) includes the M transmissions. For example, the M transmissions may correspond to P second time units, and the second time unit may be used to send the second SCI. The first terminal device may send the second SCI in the N second time units, and does not need to send the second SCI in all the P second time units. In other words, the first terminal device does not need to send SCI (the first SCI and/or the second SCI) for all transport blocks of the first periodic service. For a second terminal device, a quantity of times of decoding the SCI is reduced, so that power consumption of the second terminal device can be reduced. In addition, because a quantity of pieces of the SCI sent by the first terminal device is reduced, transmission overheads can also be reduced.

With reference to the first aspect, in a first optional implementation of the first aspect, an i^{th} second time unit in the N second time units is a time unit for sending one transport block in the M transmissions, and i is any integer from 0 to N-1; or a first time offset exists between the i^{th} second time unit in the N second time units and a latest sending time unit of a transport block, i is any integer from 0 to N-1, the latest sending time unit of the transport block is later than the i^{th} second time unit, and the transport block is one transport block in the M transmissions. The second time unit is a time unit for transmitting the second SCI. If scheduling is performed in a same time domain resource unit, the second time unit and the sending time unit of the corresponding transport block may be a same time unit; or if scheduling is performed across time domain resource units, the second moment may be earlier than the sending time unit of the corresponding transport block. In other words, in this embodiment of this application, scheduling in a same time domain resource unit and scheduling across time domain resource units are both supported, and a scheduling manner for the periodic service is relatively flexible. The time domain resource unit is, for example, a subframe, a slot, a mini-slot, or a symbol.

With reference to the first aspect or the first optional implementation of the first aspect, in a second optional implementation of the first aspect, the first time unit is the same as the second time unit; or a second time offset exists between an i^{th} first time unit and the i^{th} second time unit, and the second time offset is indicated by the first SCI, or is predefined or preconfigured. The first time unit is used to send the first SCI, and the second time unit is used to send the second SCI. The first time unit and the second time unit may be a same time unit. For example, the first SCI and the second SCI are sent in a same slot, so that resource utilization can be improved, and sending efficiency can be improved. Alternatively, the first time unit and the second time unit may be different time units. For example, the first SCI and the second SCI are sent in different slots. It can be learned that in this embodiment of this application, sending flexibility of the SCI is relatively high.

With reference to the first aspect, the first optional implementation of the first aspect, or the second optional implementation of the first aspect, in a third optional implementation of the first aspect, the method further includes: sending third SCI in K first time units, where the K first time units are associated with K transport blocks in the M transmissions, the third SCI indicates second configuration information, the K transport blocks are transport blocks in the M transmissions other than N transport blocks, and a j^{th} transport block in the N transport blocks is a transport block that occurs in a j^{th} second time unit in the N second time units in the M transmissions, or a transport block that most closely follows the j^{th} second time unit in the N second time units. Optionally, the second configuration information is the same as all or some information included in first configuration information indicated by first SCI sent most recently before the third SCI is sent, and K is a positive integer less than or equal to P-N. Because the first SCI may indicate the resource of the first periodic transmission, not only a receive end of the first periodic service (for example, second UE) can determine the resource of the first periodic transmission based on the first SCI, but also another terminal device can perform resource sensing based on the first SCI if receiving the first SCI, to avoid occupying the time/frequency resource of the periodic transmission to the greatest extent, thereby reducing collisions. Therefore, optionally, in addition to sending the first SCI in the N first time units, the first terminal device may also send the third SCI in the other K first time units corresponding to the M transmissions. The second configuration information indicated by the third SCI may be used by another terminal device to perform resource sensing, thereby reducing a probability of resource collision. The second terminal device may not need to detect the third SCI, to reduce power consumption. In the following description process of this application, "detecting" SCI may also be referred to as "monitoring" SCI.

With reference to the third optional implementation of the first aspect, in a fourth optional implementation of the first aspect, the method further includes: skipping sending second SCI associated with the third SCI. The second SCI is used for detection by the second terminal device, the third SCI is mainly used by another terminal device for resource sensing, and the second terminal device does not need to perform detection. Therefore, the first terminal device does not need to send the second SCI associated with the third SCI, to reduce transmission overheads. The second terminal device does not need to detect the second SCI associated with the third SCI, so that power consumption can also be reduced.

With reference to any one of the first optional implementation of the first aspect to the fourth optional implementation of the first aspect, in a fifth optional implementation of the first aspect, the method further includes: skipping sending the second SCI in P-N second time units, where the P-N second time units are associated with P-N transport blocks in the M transmissions other than the N transport blocks, and the j^{th} transport block in the N transport blocks is a transport block that occurs in the j^{th} second time unit in the N second time units in the M transmissions, or a transport block that most closely follows the j^{th} second time unit in the N second time units. That the first terminal device does not send the second SCI in the P-N second time units may be understood as that the first terminal device does not need to send the second SCI in each second time unit corresponding to the first periodic service. Therefore, a quantity of pieces of sent second SCI can be reduced, and transmission overheads can be reduced. The second terminal device may not detect the second SCI in the P-N second time units, so that power consumption caused by decoding the second SCI by the second terminal device can also be reduced.

With reference to the fifth optional implementation of the first aspect, in a sixth optional implementation of the first aspect, the method further includes: sending a first transport block of the periodic transmission on a first resource, where the first transport block is one of the P-N transport blocks, the first resource includes a time domain resource and/or a frequency domain resource, and the first resource is determined based on latest first SCI before the first resource. The first terminal device does not need to indicate the time/frequency resource each time a transport block of the first periodic service is transmitted, but only needs to indicate the resource at moments associated with some of transmission time units. This is equivalent to that one piece of SCI may schedule transmission of a plurality of transport blocks, and the second terminal device can detect a transport block in a subsequent transmission time unit based on the first configuration information indicated by the previously received first SCI. In this manner, the second terminal device can normally detect the transport block, a quantity of pieces of first SCI sent by the first terminal device can be reduced, transmission overheads can be reduced, and power consumption caused by detecting and decoding the first SCI by the second terminal device can also be reduced.

With reference to any one of the first optional implementation of the first aspect to the sixth optional implementation of the first aspect, in a seventh optional implementation of the first aspect, the first SCI further indicates whether to send the second SCI associated with the first SCI. Whether the first terminal device sends the second SCI may be indicated by using the first SCI. In this way, the second terminal device can determine, based on the indication of the first SCI, whether to continue to detect the second SCI, so that power consumption of blind detection by the second terminal device can be reduced.

With reference to any one of the first optional implementation of the first aspect to the seventh optional implementation of the first aspect, in an eighth optional implementation of the first aspect, the method further includes: sending third configuration information, where the third configuration information is used to configure a second cycle, the second cycle is a cycle for a receive end of the first periodic transmission to detect the first SCI, and the second cycle is greater than or equal to the first cycle. An occasion on which the first terminal device sends the first SCI may not be completely the same as an occasion on which the second terminal device detects the first SCI. For example, the first terminal device sends the first SCI at both N first moments and K first moments (the third SCI may also be considered as the first SCI, and has a different name only to distinguish between SCI sent at different moments), but the second terminal device may detect the first SCI at the N first moments, and may not detect the first SCI at all or some of the K first moments. Therefore, the second cycle may be further configured. The second cycle may be used by the receive end of the first periodic transmission (for example, the second terminal device) to detect the first SCI, so that the second terminal device can determine a detection occasion of the first SCI. For example, duration of the second cycle may be greater than or equal to duration of the first cycle, and the second terminal device detects the first SCI based on the second cycle, and does not need to detect the first SCI based on the first cycle, so that power consumption caused by detection can be reduced.

With reference to any one of the first optional implementation of the first aspect to the eighth optional implementation of the first aspect, in a ninth optional implementation of the first aspect, the method further includes: sending fourth configuration information, where the fourth configuration information indicates a quantity of transport blocks included in each transmission of the first periodic transmission, and/or a resource that is of the first periodic transmission and that is occupied by a transport block included in each transmission. For some periodic services, quantities of transport blocks sent by the first terminal device in different first cycles may not be completely the same. In other words, the first terminal device may send transport blocks of the periodic service by using all or some time/frequency resources that are included in the first cycle and that are used to send the periodic service. In this case, the first terminal device may send the fourth configuration information, and the second terminal device may detect the transport blocks based on the indication of the fourth configuration information, and may not perform detection on a time/frequency resource on which the first terminal device does not send a transport block, to reduce power consumption.

According to a second aspect, a communication method is provided. The method may be performed by a terminal device, or may be performed by a larger device including the terminal device, or may be performed by a chip system or another functional module. The chip system or the functional module can implement a function of the terminal device. The terminal device is, for example, referred to as a second terminal device. The method includes: detecting first sidelink control information SCI in N first time units, where the first SCI indicates first configuration information, the first configuration information indicates a resource of a first periodic transmission, the resource of the first periodic transmission includes a time domain resource and/or a frequency domain resource, the first periodic transmission includes M transmissions, a transmission cycle of the first periodic transmission is a first cycle, the M transmissions correspond to P transmission time units, N is an integer greater than or equal to 1, M is an integer less than or equal to P, and P is an integer greater than N; and detecting, in N second time units, second SCI associated with the first SCI, where the first SCI sent in the N first time units and the second SCI sent in the N second time units are used to schedule the M transmissions.

For technical effects brought by the second aspect or the various optional implementations, refer to descriptions of the technical effects of the first aspect or the corresponding implementations.

According to a third aspect, a communication apparatus is provided. The communication apparatus may be the terminal device in either of the first aspect and the second aspect (the first terminal device or the second terminal device). The communication apparatus has a function of the foregoing terminal device. The communication apparatus is, for example, a terminal device, or a functional module in a terminal device, for example, a baseband apparatus or a chip system. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional module, and the functional module is referred to as the transceiver unit. The functional module can implement the sending function and the receiving function. Alternatively, the sending unit and the receiving unit may be different functional modules, and the transceiver unit is a general term for these functional modules.

In an optional implementation, the communication apparatus further includes a storage unit. The processing unit is configured to: couple to the storage unit, and execute a program or instructions in the storage unit, to enable the communication apparatus to execute functions of the terminal device in either of the first aspect and the second aspect (the first terminal device and/or the second terminal device).

According to a fourth aspect, a computer-readable storage medium is provided, where the computer-readable storage medium is configured to store a computer program or instructions, and when the computer program or instructions are run, the method performed by the first terminal device and/or the second terminal device in the foregoing aspects is implemented.

According to a fifth aspect, a computer program product including instructions is provided. When the computer program product is run on a computer, the methods in the foregoing aspects are implemented.

According to a sixth aspect, an apparatus is provided, including units configured to perform the method according to any embodiment of this application.

### BRIEF DESCRIPTION OF DRAWINGS

FIG. 1 is a schematic diagram of a transmission manner of SCI 1 and SCI 2;
FIG. 2 is a schematic diagram of resource selection performed by TX UE;
FIG. 3A and FIG. 3B are schematic diagrams of two application scenarios according to an embodiment of this application;
FIG. 4 is a flowchart of a communication method according to an embodiment of this application;
FIG. 5A and FIG. 5B are two examples of various time units according to an embodiment of this application;
FIG. 6A, FIG. 6B, FIG. 7, and FIG. 8 are schematic diagrams of several working manners according to a communication method according to an embodiment of this application;
FIG. 9 is a schematic block diagram of a communication apparatus according to an embodiment of this application; and
FIG. 10 is a schematic block diagram of a terminal device according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

The following explains and describes some terms or concepts in embodiments of this application, to facilitate understanding of a person skilled in the art.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect to people, things, machines, and the like, and may be widely used in various scenarios, for example, including but not limited to the following scenarios: cellular communication, device-to-device (device-to-device, D2D) communication, vehicle to everything (vehicle to everything, V2X), machine-to-machine /machine-type communications (machine-to-machine/machine-type communications, M2M/MTC), the internet of things (internet of things, IoT), virtual reality (virtual reality, VR), augmented reality (augmented reality, AR), industrial control (industrial control), self-driving (self-driving), remote medical (remote medical), a smart grid (smart grid), smart furniture, smart office, smart wear, smart transportation, a smart city (smart city), a drone, and a robot. The terminal device may be sometimes referred to as user equipment (user equipment, UE), a terminal, an access station, a UE station, a remote station, a wireless communication device, a user apparatus, or the like. For ease of description, in embodiments of this application, an example in which the terminal device is UE is used for description.

A network device in embodiments of this application includes, for example, an access network device and/or a core network device. The access network device is a device having a wireless transceiver function, and is configured to communicate with the terminal device. The access network device includes but is not limited to a base station (BTS, NodeB, eNodeB/eNB, or gNodeB/gNB), a transmission reception point (transmission reception point, TRP), and a 3^{rd} generation partnership project (3^{rd} generation partnership project, 3GPP) subsequent evolved base station in the foregoing communication system, and an access node, a wireless relay node, and a wireless backhaul node in a wireless fidelity (wireless fidelity, Wi-Fi) system, and the like. The base station may be a macro base station, a micro base station, a picocell base station, a small cell, a relay station, or the like. A plurality of base stations may support the foregoing networks using a same access technology, or may support the foregoing networks using different access technologies. The base station may include one or more co-site or non-co-site transmission reception points. The network device may alternatively be a radio controller, a central unit (centralized unit, CU), and/or a distributed unit (distributed unit, DU) in a cloud radio access network (cloud radio access network, CRAN) scenario. The network device may alternatively be a server, a wearable device, a vehicle-mounted device, or the like. For example, a network device in a vehicle to everything (vehicle to everything, V2X) technology may be a road side unit (road side unit, RSU). The following provides descriptions by using an example in which the access network device is a base station. The base station may communicate with a terminal device, or may communicate with a terminal device by using a relay station. The terminal device may communicate with a plurality of base stations in different access technologies. The core network device is configured to implement functions such as mobility management, data processing, session management, and policy and charging. Names of devices that implement a function of the core network in systems using different access technologies may be different. This is not limited in embodiments of this application. Using a 5G system as an example, the core network device includes an access and mobility management function (access and mobility management function, AMF), a session management function (session management function, SMF), a policy control function (policy control function, PCF), a user plane function (user plane function, UPF), or the like. Using a 4G system as an example, the core network device includes a mobility management entity (mobility management entity, MME), a serving gateway (serving gateway, SGW), a policy and charging rules function (policy and charging rules function, PCRF), a public data network gateway (public data network gateway, PGW), or the like.

In embodiments of this application, a communication apparatus configured to implement a function of a network device may be a network device, or may be an apparatus that can support the network device in implementing the function, for example, a chip system. The apparatus may be mounted in the network device. In technical solutions provided in embodiments of this application, the technical solutions provided in embodiments of this application are described by using an example in which the apparatus configured to implement the function of the network device is a network device.

In embodiments of this application, unless otherwise specified, a noun represents "a singular noun or a plural noun", that is, "one or more". "At least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including any combination of singular items (pieces) or plural items (pieces). For example, at least one of a, b, or c indicates: a, b, c, a and b, a and c, b and c, or a, b, and c, where a, b, and c may be singular or plural.

Ordinal numerals such as "first" and "second" in embodiments of this application are used to distinguish between a plurality of objects, and are not intended to limit sizes, content, a sequence, a time sequence, priorities, or importance degrees of the plurality of objects. For example, a first cycle and a second cycle may be a same cycle, or may be different cycles. In addition, these names do not indicate that the two cycles have different duration, time domain locations, priorities, importance degrees, or the like. In addition, step numbers in embodiments described in this application are merely used to distinguish between different steps, but are not used to limit a sequence of the steps. For example, step S401 may occur before step S402, or may occur after step S402, or may occur at the same time with step S402.

The following describes technical features related to resource selection in SL.

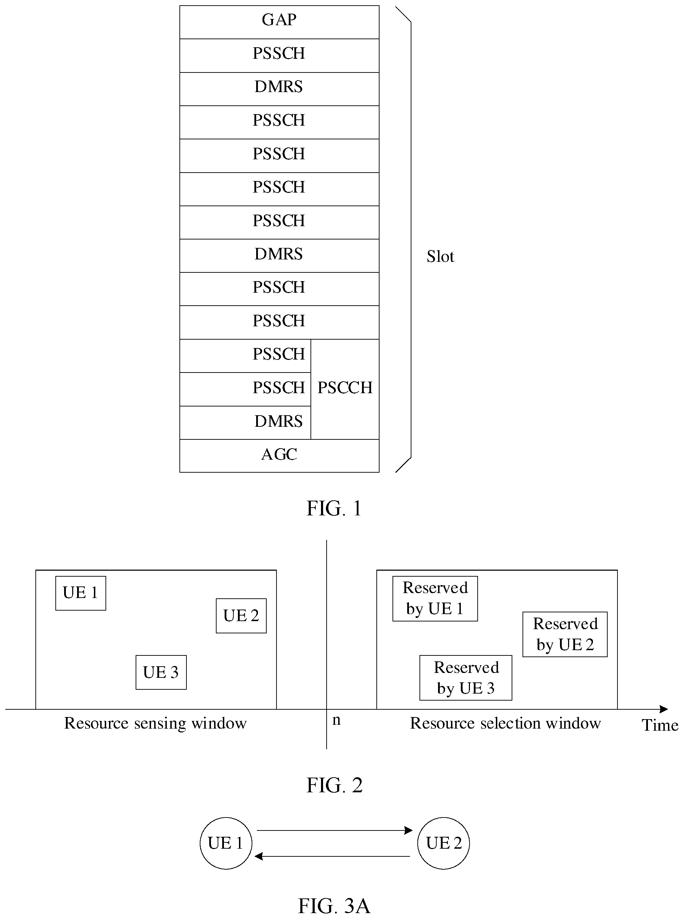

In a new radio (new radio, NR) SL mode (mode) 2, that is, in a distributed mode, TX UE may select an SL communication resource for transmission from an SL resource pool by using two processes: resource sensing and resource selection, to avoid interference between different UEs to the greatest extent. To facilitate resource sensing, sidelink control information (sidelink control information, SCI) may be divided into two parts: SCI 1 and SCI 2. The SCI 1 may also be referred to as the first stage (the first stage) SCI, and the SCI 2 may also be referred to as the second stage (the second stage) SCI. The SCI 1 may be transmitted by using a PSCCH, and the SCI 2 may be transmitted by using a PSSCH. For example, a PSCCH in FIG. 1 may carry the SCI 1, and one or more PSSCHs in FIG. 1 may carry the SCI 2 corresponding to the SCI 1. The SCI 1 mainly carries related information of physical sidelink shared channel (physical sidelink shared channel, PSSCH) resource scheduling and information used to decode the SCI 2. The SCI 2 mainly carries related information used to decode data carried on the PSSCH.

As shown in FIG. 2, when the TX UE performs resource selection, a trigger moment n is first set. The trigger moment n is, for example, a determined moment for performing resource selection, or a current moment. A resource sensing window is set before the moment n, and a resource selection window is set after the moment n. In the resource sensing window, the TX UE detects, on all subchannels, SCI 1 from another TX UE, where the subchannel includes a plurality of consecutive resource blocks (resource block, RB). If the SCI 1 from the another TX UEs is successfully decoded, the TX UE may obtain a resource reservation indication of the another TX UE and a location of a demodulation reference signal (demodulation reference signal, DMRS) carried on the PSSCH, so that a resource occupied (or reserved) by the another TX UE may be determined based on a DMRS carried on the PSCCH or DMRS measurement reference signal received power (reference signal received power, RSRP) carried on the PSSCH from the another TX UE. If one or more subchannels in the resource selection window are not occupied by the other TX UEs, or although the one or more subchannels are occupied by the other TX UEs, RSRP obtained through measurement on these subchannels is less than a first threshold, the one or more subchannels are considered as available candidate resources in the resource selection window. The first threshold may be determined based on a priority of a transport block (transport block, TB) to be sent by the TX UE and a priority of a transport block sent by the another TX UE.

After determining the available candidate resources, the TX UE may select, from the available candidate resources in the resource selection window, a resource used for transmission. When performing transmission on the selected resource, the TX UE may indicate, in the SCI 1, a resource occupied by a current transport block and/or a resource reserved for the current transport block for retransmission. One TB may be transmitted by using one PSSCH. If the TX UE needs to periodically transmit a plurality of TBs, a resource reservation cycle may be further indicated in the SCI 1. This means that the TX UE reserves periodic resources, each cycle includes a resource reserved for one TB for initial transmission and/or retransmission, and each reserved resource corresponds to a same frequency domain resource in different cycles.

In a further aspect, in an SL communication mechanism, the UE needs to detect, on all subchannels in the resource pool, a PSCCH of another UE. If one or more PSCCHs are detected, SCI 2 carried on a PSSCH associated with each of the one or more PSCCHs is decoded, to obtain a source address (identifier, ID) and a destination ID indicated by each piece of SCI 2, and determine, based on the source ID and/or the destination ID indicated by the SCI 2, whether to decode data carried on the PSSCH carrying the SCI 2.

It can be learned that, the TX UE needs to send SCI for each PSSCH. In one aspect, the SCI is used by another UE for interference avoidance during resource selection, and in a further aspect, the SCI is used by RX UE to receive data (the RX UE needs to decode SCI associated with each PSSCH). However, for a periodic service, if parameters such as a cycle for sending a data packet by the TX UE and a data packet size are relatively fixed, most content of information included in SCI associated with a plurality of PSSCHs remains basically unchanged. In this case, the RX UE decodes the SCI associated with each PSSCH, and obtained information is relatively similar. It may be considered that the RX UE performs a redundant decoding process for a plurality of times, and the decoding process also causes relatively high power consumption. In addition, the TX UE sends SCI for each PSSCH. This also wastes transmission resources.

In view of this, technical solutions in embodiments of this application are provided. In embodiments of this application, for example, a first periodic service (or referred to as a first periodic transmission) includes M transmissions, the M transmissions may correspond to P second time units, and the second time unit may be used to send second SCI. A first terminal device may send second SCI in N second time units, and does not need to send second SCI in all the P second time units. In other words, the first terminal device does not need to send SCI (first SCI and/or second SCI) for all transport blocks of the first periodic service. For a second terminal device, a quantity of times of decoding SCI is reduced, so that power consumption of the second terminal device can be reduced. In addition, because a quantity of pieces of the SCI sent by the first terminal device is reduced, transmission overheads can also be reduced.

The technical solutions provided in embodiments of this application may be applied to the 4^{th} generation (the 4^{th} generation, 4G) mobile communication technology system, for example, a long term evolution (long term evolution, LTE) system, or may be applied to a 5G system, for example, a new radio (new radio, NR) system, or may be applied to a next generation mobile communication system or another similar communications system. This is not specifically limited. In addition, the technical solutions provided in embodiments of this application may be applied to a device-to-device (device-to-device, D2D) scenario, for example, an NR-D2D scenario, or may be applied to a V2X scenario, for example, an NR-V2X scenario. For example, the technical solutions provided in embodiments of this application may be applied to an Internet of Vehicles, for example, V2X or vehicle-to-vehicle (vehicle-to-vehicle, V2V), or may be applied to a field such as intelligent driving, assisted driving, or intelligent connected vehicles. For another example, the technical solutions provided in embodiments of this application may be applied to a scenario such as extended reality (extended reality, XR) or screen projection.

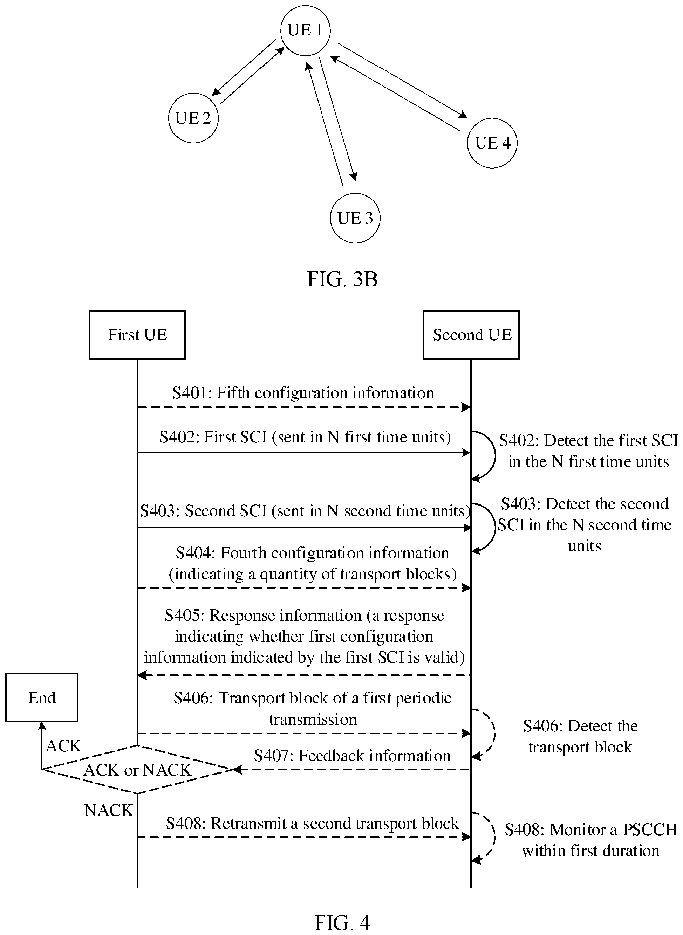

FIG. 3Ais a schematic diagram of an application scenario according to an embodiment of this application. In FIG. 3A, UE 1 and UE 2 can communicate with each other. Both the UE 1 and the UE 2 may be located within coverage (in-coverage) of a network device; or both the UE 1 and the UE 2 are located outside coverage (out-of-coverage) of the network device; or the UE 1 is located within coverage of the network device, and the UE 2 is located outside coverage of the network device; or the UE 2 is located within coverage of the network device, and the UE 1 is located outside coverage of the network device. For example, for UE located within coverage of the network device, an SL communication resource may be determined in a network control mode, and/or the SL communication resource may be determined in a distributed mode; and for UE located outside coverage of the network device, an SL communication resource may be determined in the distributed mode. Network coverage statuses of the UE 1 and the UE 2 are not limited in embodiments of this application.

Refer to FIG. 3B again. FIG. 3B is a schematic diagram of another application scenario according to an embodiment of this application. FIG. 3A uses unicast communication as an example, and FIG. 3B may be considered as a multicast communication process. In FIG. 3B, UE 1 can communicate with all of UE 2, UE 3, and UE 4. Similarly, network coverage statuses of the UE 1, the UE 2, the UE 3, and the UE 4 are not limited.

The network device in FIG. 3A or FIG. 3B is, for example, an access network device, and the access network device is, for example, a base station. The access network device corresponds to different devices in different systems. For example, the access network device may correspond to an eNB in a 4G system, and corresponds to a 5G access network device, for example, a gNB, in a 5G system. Certainly, the technical solutions provided in embodiments of this application may also be applied to a future mobile communication system. Therefore, the access network device in FIG. 3A or FIG. 3B may also correspond to a network device in the future mobile communication system. In embodiments of this application, an example in which the access network device is a base station is used. Actually, with reference to the foregoing description, the access network device may alternatively be a device such as an RSU.

With reference to the accompanying drawings, the following describes a method provided in embodiments of this application. In the accompanying drawings corresponding to embodiments of this application, all optional steps are represented by dashed lines. All embodiments of this application may be applied to the network architecture shown in FIG. 3A. The first UE in embodiments of this application is, for example, the UE 1 in FIG. 3A, and the second UE in embodiments of this application is, for example, the UE 2 in FIG. 3A. Alternatively, the first UE in embodiments of this application is, for example, the UE 2 in FIG. 3A, and the second UE in embodiments of this application is, for example, the UE 1 in FIG. 3A. Alternatively, all embodiments of this application may be applied to the network architecture shown in FIG. 3B. The first UE in embodiments of this application is, for example, the UE 1 in FIG. 3B, and the second UE in embodiments of this application is, for example, the UE 2, the UE 3, or the UE 4 in FIG. 3B. Alternatively, the first UE in embodiments of this application is, for example, the UE 2, the UE 3, or the UE 4 in FIG. 3B, and the second UE in embodiments of this application is, for example, the UE 1 in FIG. 3B.

An embodiment of this application provides a communication method. FIG. 4 is a flowchart of the method.

S401: First UE sends fifth configuration information. Correspondingly, second UE receives the fifth configuration information from the first UE.

For example, the fifth configuration information is included in radio resource control (radio resource control, RRC) signaling or a media access control (media access control, MAC) control element (control element, CE), or may be included in other signaling. In this embodiment of this application, an example in which the fifth configuration information is included in the RRC signaling is used. The RRC signaling indicates, for example, one or more configurations, or the RRC signaling includes, for example, one or more pieces of configuration information. For example, one piece of configuration information corresponds to one configuration, the fifth configuration information is one piece of the configuration information, and the fifth configuration information corresponds to, for example, a first configuration. There may be a plurality of periodic services, and different periodic services may have different transmission requirements. For example, different periodic services may have different transmission cycles. Therefore, this embodiment of this application provides one or more configurations, and different configurations is applicable to different periodic services. At least one parameter corresponding to different configurations is different. For example, duration of cycles corresponding to different configurations may be equal or may be unequal. For another example, hybrid automatic repeat request (hybrid automatic repeat request, HARQ) information corresponding to different configurations may be the same or different. The RRC signaling includes one or more pieces of configuration information. For example, each piece of configuration information includes an index of the configuration information (or an index (index) of a configuration corresponding to the configuration information, or an index of a periodic transmission corresponding to the configuration information), and/or includes HARQ information of a periodic transmission corresponding to the configuration information. Using the fifth configuration information as an example, the fifth configuration information includes, for example, an index of a first periodic transmission, and/or includes HARQ information of the first periodic transmission. HARQ information corresponding to a periodic transmission includes, for example, information about an initial HARQ process ID occupied by the periodic transmission and/or a quantity of HARQ process IDs occupied by the periodic transmission. For example, if the first periodic transmission has a total of eight available HARQ process IDs, a quantity of HARQ process IDs occupied by the first periodic transmission is 8. For example, if an index of an initial HARQ process ID occupied by the first periodic transmission is 7, an index of a HARQ process ID occupied by the second transport block of the first periodic transmission is 8, an index of a HARQ process ID occupied by the third transport block of the first periodic transmission is 1, and so on.

In this embodiment of this application, a scheduling manner in a configuration is equivalent to semi-persistent scheduling (semi-persistent scheduling, SPS). Therefore, the "configuration" in this embodiment of this application may also be referred to as an "SPS configuration", a cycle corresponding to the configuration may also be referred to as an SPS cycle, and an index corresponding to the configuration may also be referred to as an SPS index, an SPS configuration index, or the like. For example, the "first configuration" may also be referred to as a "first SPS configuration", a "first cycle" may also be referred to as a "first SPS cycle", and an index corresponding to the first configuration may also be referred to as a "first SPS index".

Alternatively, the first UE may not send the fifth configuration information. Therefore, S401 is an optional step.

S402: The first UE sends first SCI in N first time units. Correspondingly, the second UE may detect the first SCI in the N first time units. In other words, the second UE may receive and detect the first SCI in the N first time units.

The first SCI may indicate first configuration information, or the first SCI may include the first configuration information. The first configuration information may indicate a resource of the first periodic transmission. For example, the first configuration information includes information about the resource of the first periodic transmission, and the resource of the first periodic transmission includes a time domain resource and/or a frequency domain resource. Optionally, a transmission cycle of the first periodic transmission is, for example, the first cycle, and the first cycle may also be indicated by using the first configuration information.

The periodic transmission may include M transmissions. One of the M transmissions may be completed in one first cycle, and one transmission may be completed by using one or more resources. M may be an integer greater than 1. For example, a plurality of consecutive time periods whose duration is the first cycle may be obtained through division in time domain. Each time period may be considered as one first cycle. One time period may include one of the M transmissions. For example, one or more resources in the time period may be used to carry a transport block of the transmission. One or more transport blocks may be transmitted in one transmission.

One of the M transmissions may be carried on one or more resources in one first cycle. Therefore, one of the M transmissions may correspond to one or more transmission time units. For example, the M transmissions correspond to P transmission time units, and P is an integer greater than or equal to M. For example, P is a multiple of M. The transmission time unit herein may be understood as a transmission time unit of a transport block corresponding to a periodic service, and P may also be understood as a quantity of transport blocks sent in the M transmissions. It should be understood that, P herein is understood as a maximum quantity of transport blocks that can be sent in the M transmissions, or a quantity of transport blocks determined based on the resource of the first periodic transmission. When sending transport blocks, the first UE may send a transport block on each resource of the first periodic transmission. In this case, a quantity of transport blocks actually sent in the M transmissions is P. Alternatively, when sending transport blocks, the first UE may not send a transport block on each resource of the first periodic transmission, but send transport blocks on some of the resources. In this case, the quantity of transport blocks actually sent in the M transmissions is less than P. In other words, for example, if the periodic service is transmitted for P times in M first cycles, each time corresponds to one transmission time unit. In addition, the M transmissions may further correspond to P first time units and P second time units, and the first time unit, the second time unit, and the transmission time unit may be in a one-to-one correspondence. Alternatively, regardless of a quantity of transmission time units corresponding to one transmission, one transmission may correspond to only one first time unit and only one second time unit. In this case, the M transmissions may correspond to P transmission time units, and correspond to M first time units and M second time units. For the first UE, the first time unit may be understood as a time unit used to transmit the first SCI, and the second time unit may be understood as a time unit used to transmit the second SCI. For the second UE, the first time unit may be understood as a time unit used to detect the first SCI, and the second time unit may be understood as a time unit used to detect the second SCI. In the following description process, that the first time unit, the second time unit, and the transmission time unit are in a one-to-one correspondence is mainly used as an example.

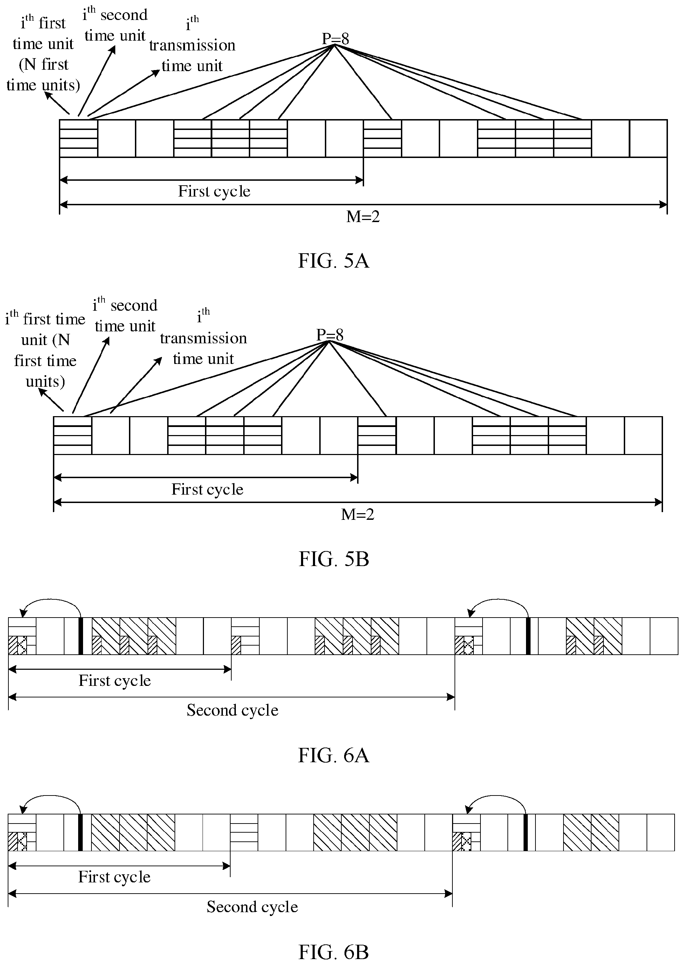

For example, for one of the M transmissions, the transmission corresponds to I first time units, I second time units, and I transmission time units, where I is a positive integer, and I is less than P. For example, I is a maximum quantity of transport blocks that can be sent in the transmission, or is a quantity of transport blocks determined based on a resource that is of the first periodic transmission and that corresponds to the transmission. For this, refer to FIG. 5A or FIG. 5B. In FIG. 5A and FIG. 5B, that the periodic transmission includes two transmissions is used as an example. For example, the transmission is transmission corresponding to the first cycle in FIG. 1, and one block in FIG. 5A or FIG. 5B represents one slot. In FIG. 5A or FIG. 5B, each first cycle includes four resources, as shown by blocks filled with horizontal lines. For example, if one transport block is transmitted on each resource, a maximum of four transport blocks can be sent in one transmission. Therefore, 1=4, and P=8. In actual application, one block filled with horizontal lines may correspond to (or include) one or more of one first time unit, one second time unit, and one transmission time unit. In other words, an i^{th} first time unit, an i^{th} second time unit, and an i^{th} transmission time unit may be respectively located in different slots. Alternatively, any two of the three may be located in a same slot, and the other one of the three may be located in another slot. Alternatively, the three may be located in a same slot. For example, in FIG. 5A, each block filled with horizontal lines may correspond to one first time unit, one second time unit, and one transmission time unit. This indicates that the i^{th} first time unit, the i^{th} second time unit, and the i^{th} transmission time unit are located in a same slot. For another example, in FIG. 5B, each block filled with horizontal lines may correspond to one first time unit and one second time unit, and a transmission time unit corresponds to a next block. This indicates that the i^{th} first time unit and the i^{th} second time unit are located in a same slot, and the i^{th} transmission time unit is located in a next slot of the slot. In addition, the N first time units are a proper subset of the P first time units. In FIG. 5A and FIG. 5B, N is less than 8, and the N first time units may be any N first time units shown in FIG. 5A or FIG. 5B. For example, if N is less than 4, the N first time units may be located in one first cycle or two first cycles; or if N is greater than 4, the N first time units are located in two first cycles. In FIG. 5A and FIG. 5B, N=1 is used as an example. For example, the first time unit is the first time unit (that is, i=1) shown in FIG. 5A or FIG. 5B. The i^{th} second time unit in the I second time units corresponds to the i^{th} first time unit in the I first time units. For example, the correspondence herein is understood as that the i^{th} first time unit and the i^{th} second time unit are in a same slot, or first SCI sent in the i^{th} first time unit may indicate a resource of second SCI sent in the i^{th} second time unit, or the i^{th} second time unit is a latest sending time unit of second SCI for the i^{th} first time unit, or the first SCI sent in the i^{th} first time unit may schedule the second SCI sent in the i^{th} second time unit. Similarly, the i^{th} transmission time unit in the I transmission time units corresponds to the i^{th} second time unit in the I second time units (or the i^{th} first time unit in the I first time units). The correspondence herein means, for example, that the i^{th} transmission time unit and the i^{th} second time unit (or the i^{th} first time unit) are in a same slot, or that the second SCI sent in the i^{th} second time unit (or the first SCI sent in the i^{th} first time unit) may schedule a transport block sent in the i^{th} transmission time unit, or the i^{th} transmission time unit is a latest sending time unit of a transport block for the i^{th} second time unit (or the i^{th} first time unit). If the first SCI indicates a resource location of the second SCI and/or indicates a resource location of the i^{th} transport block, the i^{th} second time unit is not necessarily the latest sending time unit of the second SCI for the i^{th} first time unit. Similarly, the i^{th} transmission time unit is not necessarily the latest sending time unit of the transport block for the i^{th} second time unit (or the i^{th} first time unit). The i^{th} first time unit may be used to send the first SCI, the i^{th} second time unit may be used to send the second SCI, the i^{th} transmission time unit may be used to send the i^{th} transport block in the transmission (a total of I transport blocks are sent in the transmission), and i is an integer greater than or equal to 1 and less than or equal to I.

In this embodiment of this application, the "transmission time unit" may be a transmission moment, or may be transmission duration, or a transmission slot; the "first time unit" may be a first moment, or may be first duration, or may be a first slot; and the "second time unit" may be a second moment, or may be second duration, or may be a second slot.

Optionally, the i^{th} second time unit and the i^{th} transmission time unit may be a same time unit. In other words, the time unit used to send the second SCI and the time unit used to send the transport block scheduled by the second SCI may be a same time unit. For example, if the second SCI and the transport block are sent in a same slot (slot), it may be considered that the time unit used to send the second SCI and the time unit used to send the transport block are a same time unit. Alternatively, a first time offset exists between the i^{th} second time unit and the i^{th} transmission time unit, and the i^{th} second time unit is earlier than the i^{th} transmission time unit. For example, the first time offset is indicated by the first SCI, or is predefined by using a protocol, or is preconfigured by a network device, or is preconfigured in the first UE and/or the second UE. In other words, the time unit used to send the second SCI and the time unit used to send the transport block scheduled by the second SCI may be different time units. For example, if the second SCI and the transport block are sent in different slots, it may be considered that the time unit used to send the second SCI and the time unit used to send the transport block are different time units. In this manner, the technical solution in this embodiment of this application can be used for both intra-slot scheduling and cross-slot scheduling, and is relatively flexible.

Optionally, the i^{th} first time unit and the i^{th} second time unit may be a same time unit. In other words, the time unit used to send the first SCI and the time unit used to send the second SCI scheduled by the first SCI may be a same time unit. For example, if the second SCI and the first SCI are sent in a same slot, it may be considered that the time unit used to send the second SCI and the time unit used to send the first SCI are a same time unit. Alternatively, a second time offset exists between the i^{th} second time unit and the i^{th} first time unit. For example, the second time offset is indicated by the first SCI, or is predefined by using a protocol, or is preconfigured by a network device, or is preconfigured in the first UE and/or the second UE. In other words, the time unit used to send the second SCI and the time unit used to send the first SCI scheduled by the first SCI may be different time units. For example, if the second SCI and the first SCI are sent in different slots, it may be considered that the time unit used to send the second SCI and the time unit used to send the first SCI are different time units.

Optionally, the i^{th} first time unit, the i^{th} second time unit, and the i^{th} transmission time unit are a same time unit. For example, in the i^{th} transmission, if the first SCI, the second SCI, and the transport block are all sent in a same slot, it may be considered that the i^{th} first time unit, the i^{th} second time unit, and the i^{th} transmission time unit are a same time unit. This is used as an example in FIG. 5A. Alternatively, the i^{th} first time unit, the i^{th} second time unit, and the i^{th} transmission time unit are different time units. For example, in the i^{th} transmission, if the first SCI, the second SCI, and the transport block are sent in three slots, it may be considered that the i^{th} first time unit, the i^{th} second time unit, and the i^{th} transmission time unit are all different time units. The three slots may be consecutive in time domain, or two of the three slots are consecutive, and the other slot is inconsecutive, or the three slots are all inconsecutive. Alternatively, any two of the i^{th} first time unit, the i^{th} second time unit, and the i^{th} transmission time unit are a same time unit, and the other one is a different time unit. Alternatively, in brief description, the i^{th} first time unit, the i^{th} second time unit, and the i^{th} transmission time unit are not completely the same time unit. For example, in the i^{th} transmission, if the first SCI and the second SCI are sent in one slot, and the transport block is sent in another slot, it may be considered that the i^{th} first time unit, the i^{th} second time unit, and the i^{th} transmission time unit are not completely the same time unit, and the two slots may be consecutive or inconsecutive in time domain. This is used as an example in FIG. 5B, and that the two slots are consecutive is used as an example in FIG. 5B. For another example, in the i^{th} transmission, if the first SCI is sent in one slot, and the second SCI and the transport block are sent in another slot, it may be considered that the i^{th} first time unit, the i^{th} second time unit, and the i^{th} transmission time unit are not completely the same time unit, and the two slots may be consecutive or inconsecutive in time domain.

First time units corresponding to the M transmissions may include the N first time units. For example, the N first time units correspond to C1 transmissions in the M transmissions. For example, C1 is a positive integer less than or equal to N, C1 is less than M, and C1 is less than P. The N first time units may be associated with N transmission time units, the N transmission time units may be used to send N transport blocks, and the N transport blocks are a subset of the P transport blocks. For example, a j^{th} transport block in the N transport blocks may be a transport block that occurs in a j^{th} transmission time unit in the N transmission time units, or the j^{th} transport block in the N transport blocks may be a transport block that most closely follows a j^{th} first time unit in the N first time units (the transport block that most closely follows the j^{th} first time unit is a transport block sent in the j^{th} transmission time unit). For example, j may be an integer from 1 to N. N is a positive integer, and N is less than P. Since N is less than P, it indicates that the first UE sends the first SCI in some of the P first time units. This is equivalent to that the first UE may not need to send the first SCI for each transport block of the first periodic transmission. Therefore, a quantity of pieces of sent first SCI can be reduced, and transmission overheads can be reduced. The second UE does not need to receive excessive first SCI, so that power consumption caused by decoding the first SCI by the second UE can also be reduced.

The first SCI indicates the first configuration information. If the second UE does not detect first SCI in a first time unit corresponding to a transmission, the second UE may also determine, based on first configuration information indicated by previously received (for example, last received) first SCI, a resource of a transmission time unit corresponding to the transmission, so as to detect, in the transmission time unit corresponding to the transmission, a transport block of the first periodic transmission. For example, the first UE sends, on a first resource, a first transport block corresponding to the first periodic transmission, where the first resource is a resource belonging to P-N transmission time units. For example, the first resource is a resource of a first transmission time unit in the P-N transmission time units, P is a total quantity of transport blocks of M transmissions, and P may be greater than or equal to M. It can be learned that the second UE does not detect first SCI in a first time unit associated with the first transport block. In this case, the second UE may determine the first resource based on first SCI that is most recently received (the latest in time domain) before the first resource, to receive and detect the first transport block on the first resource. In other words, the first UE does not need to indicate a resource each time a transport block of the periodic service is transmitted, but only needs to indicate the resource when some of the transport blocks are transmitted. This is equivalent to that one piece of first SCI may schedule transmission of a plurality of transport blocks, and the second UE can detect a transport block in a subsequent transmission time unit based on the first configuration information indicated by the previously received first SCI. In this manner, the second UE can normally detect the transport block, a quantity of pieces of first SCI sent by the first UE can be reduced, transmission overheads can be reduced, and power consumption caused by detecting and decoding the first SCI by the second UE can also be reduced.

Because the first SCI may indicate the resource of the first periodic transmission, not only a receive end of the first periodic transmission (for example, the second UE) can determine the resource of the first periodic transmission based on the first SCI, but also another UE can perform resource sensing based on the first SCI if receiving the first SCI, to avoid occupying the resource of the first periodic transmission to the greatest extent, thereby reducing collisions. Therefore, optionally, in addition to sending the first SCI in the N first time units, the first UE may also send the first SCI in other K first time units. To distinguish the first SCI sent in the K first time units from the first SCI sent in the N first time units, the first SCI sent in the K first time units may be referred to as third SCI. The K first time units, for example, correspond to C2 transmissions in the M transmissions. For example, C2 is a positive integer less than or equal to K, the K first time units, for example, correspond to K transmission time units, and K transport blocks may be transmitted in the K transmission time units. Therefore, it may be considered that the K first time units are associated with K transport blocks. Alternatively, K pieces of third SCI sent in the K first time units may schedule the K transport blocks, and one piece of third SCI schedules one transport block. Therefore, it is considered that the K first time units are associated with the K transport blocks, and one first time unit is associated with one transport block. K is a positive integer, and K is less than P. For example, there is no intersection set between transmission corresponding to the K first time units and transmission corresponding to the N first time units. For example, the K transport blocks are transport blocks in the P transport blocks other than the N transport blocks.

The third SCI may indicate second configuration information, and the second configuration information may indicate a resource of the first periodic transmission. Optionally, the second configuration information is the same as all or some information of first configuration information indicated by first SCI most recently sent before the third SCI is sent. For example, the first SCI and the third SCI are SCI of a same type, for example, both are SCI 1. In other words, the first UE may send, in a plurality of first time units, the SCI that can indicate the resource of the first periodic transmission. In this way, a probability that another UE detects such SCI can be increased, so that the another UE can perform resource sensing more effectively. However, the second UE may receive and detect the first SCI in the N first time units, but may not receive and detect the third SCI in the K first time units, or may receive and detect the third SCI only in some of the K first time units. It may be understood that, a main purpose of sending the third SCI by the first UE is to enable UE other than the second UE to perform resource sensing and resource selection. The second UE can already determine the resource of the first periodic transmission by receiving the first SCI in the N first time units. Therefore, the second UE does not need to detect the third SCI, or the second UE does not need to detect, in more time units, SCI indicating the resource of the first periodic transmission, thereby reducing power consumption caused by detecting the SCI by the second UE.

It can be learned that an occasion on which the first UE sends the first SCI may not be completely the same as an occasion on which the second UE detects the first SCI. For example, the first UE sends the first SCI in both the N first time units and the K first time units (the third SCI may also be considered as the first SCI, and has a different name only to distinguish between SCI sent in different time units), but the second UE may detect the first SCI in the N first time units, and may not detect the first SCI in all or some of the K first time units. Therefore, a second cycle may be further configured. The second cycle may be used by a receive end (for example, the second UE) of the first periodic transmission to detect the first SCI. For example, duration of the second cycle may be greater than or equal to duration of the first cycle. The first UE may send the first SCI based on the second cycle, where the first SCI may indicate whether to send second SCI. For example, in the first SCI sent based on the second cycle, N pieces of first SCI indicate to send the second SCI, and the N pieces of first SCI are first SCI sent in the N first time units. All or some of the K first time units are not sending time units of the first SCI corresponding to the second cycle. Therefore, the second UE can detect the first SCI in the N first time units, but does not detect the first SCI in all or some of the K first time units. For example, the second cycle may be configured by the first UE. In this case, the first UE may send third configuration information to the second UE, where the third configuration information may be used to configure the second cycle. After receiving the third configuration information, the second UE may detect the first SCI based on the second cycle. Alternatively, the second cycle may be configured by the network device, and the network device may separately send the third configuration information to the first UE and the second UE. Alternatively, the second cycle may be preconfigured in the first UE and the second UE, or may be predefined by using a protocol, or the like. In this case, neither the first UE nor the network device needs to send the third configuration information to the second UE.

Optionally, the second cycle may alternatively be duration of using configuration of the first SCI and configuration of the second SCI. After the second cycle ends, the first configuration information is no longer valid. It may also be understood that there may not be a deactivation operation after an SPS configuration is activated, and deactivation may be automatically implemented after the second cycle ends.

S403: The first UE sends, in N second time units, second SCI associated with the first SCI. Correspondingly, the second UE may detect, in the N second time units, the second SCI associated with the first SCI. In other words, the second UE may receive and detect, in the N second time units, the second SCI associated with the first SCI. The first SCI sent in the N first time units and the second SCI sent in the N second time units may be used to schedule the M transmissions included in the first periodic transmission. Therefore, it may be understood that the M transmissions are transmission of transport blocks corresponding to the first periodic transmission.

Optionally, the second SCI may further indicate an index of the first periodic transmission, and/or indicate HARQ information of the first periodic transmission. Alternatively, the first SCI may indicate the index of the first periodic transmission, and/or indicate the HARQ information of the first periodic transmission. Alternatively, the first SCI may indicate the index of the first periodic transmission, and the second SCI may indicate the HARQ information of the first periodic transmission; or the second SCI may indicate the index of the first periodic transmission, and the first SCI may indicate the HARQ information of the first periodic transmission. If S401 is performed, it may be understood that the network device indicates a plurality of configurations by using the RRC signaling, and then indicates one of the configurations by using the first SCI and/or the second SCI. This configuration is the first configuration described above. Alternatively, S401 may not be performed, and the first configuration may be indicated by the first SCI and/or the second SCI.

The N first time units are in a one-to-one correspondence with the N second time units. For example, first SCI sent in a first time unit in the N first time units is associated with second SCI sent in a second time unit corresponding to the first time unit. One piece of second SCI is associated with one piece of first SCI. For example, it is understood that the second SCI is sent only when the first SCI is sent. If the first SCI is sent, the second SCI may be sent, or the second SCI may not be sent. If the first SCI is not sent, the second SCI is not sent.

Optionally, the first SCI may include second indication information, the second indication information may indicate whether to send the second SCI, and the second indication information occupies, for example, one or more bits (bit). For example, the second indication information occupies one bit. If a value of the bit is "1", it indicates that the second indication information indicates to send the second SCI. If the value of the bit is "0", it indicates that the second indication information indicates not to send the second SCI. Alternatively, regardless of a quantity of bits occupied by the second indication information, if the first SCI includes the second indication information, it indicates that the second indication information indicates to send the second SCI, or if the first SCI does not include the second indication information, it indicates that the second indication information indicates not to send the second SCI. Alternatively, there may also be another indication manner for the second indication information. If the second indication information indicates to send the second SCI, it indicates that second SCI associated with the first SCI is to be sent next, and the second UE may continue to receive and detect the second SCI based on the second indication information. If the second indication information indicates not to send the second SCI, it indicates that the second SCI associated with the first SCI is not to be sent, and the second UE may not need to detect, based on the second indication information, the second SCI associated with the first SCI, to reduce power consumption of the second UE. In other words, whether the second UE detects the second SCI associated with the first SCI may be determined based on the second indication information included in the first SCI. As described above, the first UE may further send the third SCI. Optionally, when sending the third SCI, the first UE may not send second SCI associated with the third SCI. For example, second indication information included in the third SCI may indicate not to send the associated second SCI, or the third SCI may not include the second indication information. The second SCI is used for detection by the second UE, the third SCI is mainly used by another UE for resource sensing, and the second UE does not need to perform detection. Therefore, the first UE does not need to send the second SCI associated with the third SCI, to reduce transmission overheads.

For example, if the first UE sends N pieces of first SCI in the N first time units, each of the N pieces of first SCI may indicate the first configuration information. Different first SCI may indicate same or different first configuration information. For example, the first configuration information indicated by the first SCI sent in different first time units may be different. For example, one first cycle corresponds to one transmission, and the transmission corresponds to three first time units and three transmission time units. The first UE sends two pieces of first SCI in the first two first time units of the three first time units, and the two pieces of first SCI indicate two pieces of first configuration information. The first configuration information indicated by the first piece of SCI in time domain may indicate resources corresponding to two subsequent transmission time units (the two subsequent transmission time units are transmission time units corresponding to two subsequent first time units, and the first time units are in a one-to-one correspondence with the transmission time units). The first configuration information indicated by the second piece of first SCI in time domain may indicate a resource corresponding to a subsequent transmission time unit. It can be learned that content of the first configuration information indicated by the two pieces of first SCI is different. Alternatively, even if a plurality of pieces of first SCI are sent in different first time units corresponding to one transmission, first configuration information indicated by each piece of the first SCI may indicate all resources corresponding to the transmission. In this case, content of the first configuration information indicated by the plurality pieces of first SCI is the same. Similarly, the second configuration information indicated by the third SCI may be the same as all or some of the first configuration information indicated by the first SCI sent most recently before the third SCI is sent. Reference may also be made to the understanding manner herein.

For example, the second SCI may indicate that the first configuration information included in the first SCI associated with the second SCI is valid or is invalid or is no longer valid. It may also be understood that the second SCI may indicate that the first configuration information included in the first SCI associated with the second SCI is activated or is not activated or is deactivated. For example, the second SCI includes an SPS indication, and the SPS indication may indicate that the first configuration information included in the first SCI associated with the second SCI is valid or is invalid or is no longer valid, or indicate that the first configuration information included in the first SCI associated with the second SCI is activated or is not activated or is deactivated. For example, if the first configuration information indicated by the first SCI needs to be activated (or starts to be valid), the second indication information may indicate to send the second SCI, the second UE may receive and detect the second SCI based on the second indication information, the second SCI may indicate that the first configuration information indicated by the first SCI associated with the second SCI is valid, and the second UE may determine, based on the second SCI, that the first configuration information indicated by the first SCI is valid. In this case, after receiving the second SCI, the second UE may detect the first periodic service based on a resource configured by using the first configuration information. For another example, the first configuration information is currently valid, and the second UE currently detects the periodic service based on the resource configured by using the first configuration information. If the first configuration information needs to be deactivated (or is no longer valid), the second indication information may indicate to send the second SCI. The second UE may receive and detect the second SCI based on the second indication information, the second SCI may indicate that the first configuration information indicated by the first SCI associated with the second SCI is no longer valid, and the second UE may determine, based on the second indication information, that the first configuration information indicated by the first SCI is no longer valid. In this case, after receiving the second SCI, the second UE may no longer detect the first periodic service based on the resource configured by using the first configuration information. For another example, the first configuration information is currently valid, and the second UE currently detects the first periodic service based on the resource configured by using the first configuration information. Next, the first configuration information may continue to be used, and does not need to be deactivated or activated. In this case, the second indication information may indicate not to send the second SCI, and the second UE may not detect the second SCI. For another example, currently, no configuration information indicating the resource of the first periodic service is valid, and this type of configuration information does not need to be valid. In this case, the second indication information may indicate not to send the second SCI, and the second UE may not detect the second SCI. In addition, for example, currently, there may be other configuration information (configuration information other than the first configuration information) that has been valid, or there may not be valid configuration information, and the first configuration information does not need to be valid currently. In this case, the second indication information may indicate to send the second SCI, the second UE may receive and detect the second SCI based on the second indication information, the second SCI may indicate that the first configuration information indicated by the first SCI associated with the second SCI is invalid, the second UE may determine, based on the second indication information, that the first configuration information indicated by the first SCI is invalid. In this case, after receiving the second SCI, the second UE does not detect the first periodic service based on the resource configured by using the first configuration information. In other words, whether the first UE sends the second SCI depends on whether there is a requirement for sending the second SCI.

Alternatively, that the first configuration information included in the first SCI is valid or is invalid or is no longer valid may be indicated by the first SCI. For example, the first SCI may include an SPS indication, indicating that the first configuration information is valid or is invalid or is no longer valid. A subject that performs indication is not limited in this embodiment this application.

In addition, in one transmission, in a case in which the first SCI and a transport block of the first periodic service are sent but the second SCI is not sent, and in a case in which the first SCI, the second SCI, and the transport block of the first periodic service are sent, sizes of resources mapped by the transport blocks may be different. If the second SCI is also sent, a resource mapped by the transport block may be relatively small. If the second SCI is not sent, the resource mapped by the transport block may be relatively large. This is equivalent to that if the second SCI is not sent, the resource originally used to carry the second SCI may be changed to carry the transport block. Therefore, during transport block mapping, the first UE may adaptively adjust a transport block size (TB size), to improve resource utilization.

Optionally, the first UE may not send the second SCI in P-N second time units. The P-N second time units, for example, correspond to C3 transmissions in the M transmissions. For example, C3 is a positive integer less than or equal to P-N, and the P-N second time units may be associated with P-N transport blocks in the P transport blocks. For example, P-N pieces of second SCI sent in the P-N second time units may schedule the P-N transport blocks, and therefore it is considered that the P-N second time units are associated with the P-N transport blocks. One piece of second SCI schedules one transport block. Therefore, the P-N second time units are in a one-to-one association relationship with the P-N transport blocks. It can be learned that the first UE may not send the second SCI in some second time units corresponding to the M transmissions, so that transmission overheads can be reduced. In addition, the second UE does not need to detect the second SCI in these time units, so that power consumption of the second UE is reduced.

Optionally, the first SCI described above is, for example, SCI 1, and the second SCI is, for example, SCI 2. For example, the second SCI may implement a corresponding function of SCI 2. For example, the second SCI may indicate a source address and a destination address that are associated with the first periodic transmission. If the first UE sends a plurality of pieces of second SCI, because all the plurality of pieces of second SCI correspond to the first periodic transmission, all the plurality of pieces of second SCI indicate the source address and the destination address that are associated with the first periodic transmission. Certainly, types of the first SCI and the second SCI are not limited thereto. For example, both the first SCI and the second SCI may be SCI 1 or SCI 2, or the first SCI is SCI 2, and the second SCI is, for example, SCI 1. In this embodiment of this application, an example in which the first SCI is SCI 1 and the second SCI is SCI 2 is mainly used for description. The third SCI and the first SCI are SCI of a same type. For example, the third SCI is also SCI 1.

To better understand the technical solutions of embodiments of this application, the following provides FIG. 6A, FIG. 6B, FIG. 7, and FIG. 8. These accompanying drawings are schematic diagrams of the first cycle, the second cycle, and an SCI sending manner according to an embodiment of this application. These accompanying drawings are used as examples to describe the technical solutions of embodiments of this application.

With reference to FIG. 6A, three first cycles are included. One first cycle is used to transmit the periodic service once, or in other words, one first cycle corresponds to one transmission of the periodic service. In FIG. 6A, both blocks filled with "\" and blocks filled with horizontal lines represent resources of the periodic transmission, and one first cycle corresponds to one transmission. It can be learned that in the first two first cycles, resources corresponding to one transmission include four resources in total, and the first resource in the four resources and the subsequent three resources are inconsecutive in time domain. For example, for either of the first two first cycles, a quantity of corresponding transport blocks may be less than or equal to 4, a quantity of corresponding transmission time units is equal to the quantity of transport blocks, a quantity of corresponding first time units is equal to the quantity of transmission time units, or corresponds to one first time unit, and a quantity of corresponding second time units is equal to the quantity of transmission time units, or corresponds to one second time unit. For example, the first UE sends one piece of first SCI in the first slot of the second cycle, and a blocked filled with "/" in FIG. 6A represents the first SCI (or the third SCI). For differentiation, the first SCI is, for example, referred to as first SCI A. A time unit in which the first SCI A is sent is, for example, one of the N first time units, and a cycle of the N first time units is, for example, the second cycle. In FIG. 6A, FIG. 6B, FIG. 7, and FIG. 8, an example in which a length of the second cycle is twice a length of the first cycle is used. The first SCI A indicates the first configuration information, and the first configuration information may configure a resource that is used to transmit the periodic service and that is in the first cycle in which the first SCI A is located, or configure all resources of the periodic service (or in other words, configure resources that are used to transmit the periodic service and that are in a plurality of first cycles). In addition, in FIG. 6A, the first UE sends the third SCI in all first time units associated with the transmission time units of the periodic service. These first time units may be included in the K first time units. The second UE does not detect the third SCI sent in these first time units, but UE other than the second UE may detect the first SCI, to perform resource sensing and resource selection. In addition, in addition to sending the first SCI in the N first time units, the first UE further sends the second SCI in the N second time units. For example, the first UE further sends the associated second SCI in slots in which the first SCI A is located. For the second SCI, refer to a block filled with grids in FIG. 6A. The first UE sends only the first SCI in the K first time units, and does not send associated second SCI in K second time units associated with the K first time units. In FIG. 6A, an example in which the first SCI and the associated second SCI are consecutive in time domain is used. Actually, time domain locations of the first SCI and the associated second SCI are not limited. In addition, in FIG. 6A, after a second cycle ends, it can be learned that locations of resources of the periodic service change. For example, first SCI (for example, referred to as first SCI B) sent by the first UE at the beginning of the second cycle no longer indicates the first configuration, but indicates another configuration other than the first configuration, for example, referred to as a second configuration. A length of a cycle corresponding to the second configuration is, for example, equal to a length of a cycle corresponding to the first configuration, but locations of resources that correspond to the second configuration and that are used to send the periodic service are different from locations of resources that correspond to the first configuration and that are used to send the periodic service. It can be learned that, in the third first cycle, resources corresponding to one transmission include three resources in total, and the first resource in the three resources and the subsequent two resources are inconsecutive in time domain. In other words, by using the second cycle, a corresponding configuration may be activated, may be deactivated, may not be activated, or may be updated. Updating a configuration may also be understood as activating a new configuration. In FIG. 6A, an example in which locations of resources are updated is used. However, updating a configuration may alternatively be updating other parameters, for example, updating a cycle, or the like.

With reference to FIG. 6B, a difference between FIG. 6B and FIG. 6A is that the first UE sends the first SCI only in the N first time units, and does not send the third SCI in the K first time units. In this way, for UE other than the second UE, if the first SCI is not detected in the N first time units, a time/frequency resource occupied by the periodic service may not be excluded during resource sensing. However, for the first UE, transmission overheads can be reduced. For other content of FIG. 6B, refer to the description of FIG. 6A.

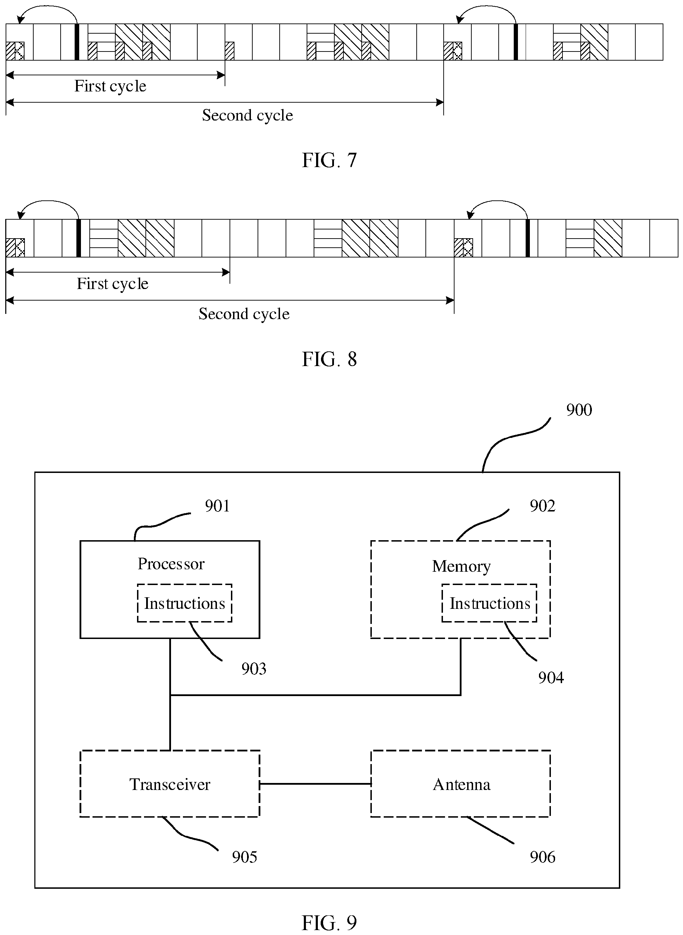

With reference to FIG. 7, a difference between FIG. 7 and FIG. 6A is that in the first two first cycles, resources corresponding to one transmission include three resources in total, and the three resources are consecutive in time domain. In addition, in the third first cycle, resources corresponding to one transmission include two resources in total, and the two resources are consecutive in time domain. In other words, in FIG. 6A, the N first time units and the N transmission time units are located in a same slot. In FIG. 7, the N first time units and the N transmission time units are located in different slots. For other content of FIG. 7, refer to the description of FIG. 6A.

With reference to FIG. 8, a difference between FIG. 8 and FIG. 7 is that the first UE sends the first SCI only in the N first time units, and does not send the first SCI in the K first time units. In this way, for UE other than the second UE, if the first SCI is not detected in the N first time units, a resource occupied by the periodic service may not be excluded during resource sensing. However, for the first UE, transmission overheads can be reduced. For other content of FIG. 8, refer to the description of FIG. 7. In addition, in FIG. 6A, FIG. 6B, FIG. 7, and FIG. 8, the horizontal axis represents time, and the vertical axis represents frequency.

After a configuration (for example, the first configuration) is activated, if the first UE does not send an additional indication, the second UE detects, by default, transport blocks of the periodic transmission on all resources that are included in the first cycle corresponding to the first configuration and that are used to send the periodic transmission. For some periodic services, quantities of transport blocks sent by the first UE in different first cycles may not be completely the same. In other words, the first UE may send the transport blocks of the periodic service by using all or some resources that are included in the first cycle and that are used to send the periodic service. For example, with reference to the first two first cycles in FIG. 6A, one first cycle includes four resources used to send the periodic service, but the first UE may send the periodic service only on two or three of the resources, and does not send the periodic service on all the four resources. If the second UE performs decoding on all the four resources, unnecessary power consumption waste is caused. Optionally, this embodiment of this application may further include S404. The first UE may send fourth configuration information in a first time unit, and correspondingly, the second UE may detect the fourth configuration information in the first time unit. The fourth configuration information may indicate a quantity of transport blocks included in each of some or all transmissions of the first periodic transmission, and/or indicate a resource that is occupied by a transport block included in each of the some or all transmissions of the first periodic transmission and that is of the first periodic transmission. The second UE may detect the transport blocks based on an indication of the fourth configuration information, and may not perform detection on a resource on which the first UE does not send a transport block, to reduce power consumption.

The first time unit is, for example, a first time unit used to send the first SCI in the first second cycle after the first configuration is valid, for example, a time unit in which the first SCI A is sent shown in FIG. 6A, or the first time unit is, for example, a first time unit associated with a transmission time unit of the first resource (the first resource in time domain herein) used to send the first periodic service in the first cycle after the first configuration is valid (or refer to the time unit in which the first SCI A is sent in FIG. 6A). In addition, provided that the first configuration is not invalid, the fourth configuration information may not need to be sent. In this case, the fourth configuration information may indicate, from the first time unit or after the first time unit, a quantity of transport blocks included in each of all transmissions of the first periodic transmission, and/or indicate a resource that is occupied by a transport block included in each of all transmissions of the first periodic transmission and that is of the first periodic transmission. This is equivalent to that the first UE sends a same quantity of transport blocks in each first cycle of the first configuration, and relative locations of resources occupied by the transport blocks are also the same. In this case, this indication manner may be used, so that the second UE can detect the transport blocks in each first cycle based on the fourth configuration information through indication once, to reduce a quantity of transmissions of the fourth configuration information by the first UE, thereby reducing transmission overheads.

Alternatively, the first time unit includes, for example, a first time unit used to send the first SCI in each second cycle. This is equivalent to that, regardless of whether a currently applied configuration is invalid, the first UE may send the fourth configuration information in the first time unit used to send the first SCI in each second cycle, so that the second UE can determine a subsequent detection manner.

Alternatively, the first time unit includes, for example, a first time unit associated with a transmission time unit of the first resource used to send the first periodic service in each first cycle. In this case, the fourth configuration information may indicate, from the first time unit or after the first time unit, a quantity of transport blocks included in each of some transmissions of the first periodic transmission, and/or indicate a resource that is occupied by a transport block included in each of some transmissions of the first periodic transmission and that is of the first periodic transmission. The some transmissions of the first periodic transmission are, for example, transmissions corresponding to the first cycle in which the fourth configuration information is located, and one piece of fourth configuration information may indicate information about transport blocks sent in the first cycle in which the fourth configuration information is located. In other words, the first UE may indicate, in each first cycle, a quantity of transport blocks sent in the first cycle and/or resources occupied by these transport blocks. For example, if quantities of transport blocks sent by the first UE in different first cycles are different, and/or resources occupied by the transport blocks sent in different first cycles are different, this indication manner may be used. This manner is relatively flexible.

For example, the fourth configuration information is included in the first SCI, or included in the second SCI, or the fourth configuration information is included in fourth SCI. The fourth SCI is, for example, SCI 1, but the fourth SCI and the first SCI are different SCI; or the fourth SCI is, for example, SCI 2, but the fourth SCI and the second SCI are different SCI. For example, the fourth SCI is SCI 2. The fourth SCI may use a polarization coding manner. During mapping, in time domain, mapping may start from an OFDM symbol occupied by the first DMRS of a PSSCH (which may be understood as a time/frequency resource used to send the periodic service). This is equivalent to that the fourth SCI and the DMRS share a time domain resource. However, in frequency domain, the DMRS is mapped once every other subcarrier, and the fourth SCI may occupy a subcarrier that is not occupied by the DMRS. Because the DMRS is used to perform channel estimation, the second UE may receive the PSSCH based on a channel estimation result. A shorter distance from the DMRS indicates a more accurate channel estimation result and more accurate decoding. Therefore, this mapping manner can ensure transmission reliability. Alternatively, the fourth configuration information may be included in RRC signaling or a MAC CE.

Refer to FIG. 6A, FIG. 6B, FIG. 7, or FIG. 8 again. Blocks filled with horizontal lines in these accompanying drawings indicate that the fourth SCI is sent. It can be learned that, in these accompanying drawings, an example in which the fourth SCI is sent in the first time unit associated with the transmission time unit of the first resource used to send the first periodic service in each cycle is used.

S405: The second UE sends response information to the first UE. Correspondingly, the first UE receives the response information from the second UE. The response information is, for example, an acknowledgment (ACK) or a negative acknowledgment (NACK). Optionally, if the first UE does not receive the response information, subsequent steps may not be performed, and the procedure ends, or the first UE may return to S401, S402, or S403.

The response information is, for example, a feedback indicating that the first configuration information included in the first SCI is valid or is invalid or is no longer valid. For example, if the first SCI or the second SCI indicates, by using an included SPS indication, that the first configuration information included in the first SCI is valid or is invalid or is no longer valid, it may be understood that the response information is a feedback for the SPS indication. If the second SCI indicates that the first configuration information included in the first SCI is valid or is invalid or is no longer valid, the second UE may send the response information to the first UE after receiving the second SCI. Alternatively, if the first SCI indicates that the first configuration information included in the first SCI is valid or is invalid or is no longer valid, the second UE may send the response information to the first UE after receiving the second SCI, or the second UE may send the response information to the first UE after receiving the first SCI. In other words, S405 may occur before S403, or after S403, or at the same time as S403.

S406: The first UE sends a transport block of the first periodic transmission to the second UE. Correspondingly, the second UE receives the transport blocks of the first periodic transmission from the first UE.

If the second UE does not detect the first SCI in a first time unit corresponding to a transmission, the second UE may determine, based on the second configuration information included in previously received first SCI, a resource of a transmission time unit corresponding to the transmission, so as to detect, in the transmission time unit corresponding to the transmission, data of the first periodic transmission. For this, refer to the foregoing description.

Alternatively, if the first SCI is detected in a first time unit corresponding to a transmission, the second UE may determine, based on the second configuration information included in the first SCI, a resource of a transmission time unit corresponding to the transmission, so as to detect, in the transmission time unit corresponding to the transmission, data of the first periodic transmission.

In addition, if the first UE sends the fourth configuration information, the second UE may further determine, based on the fourth configuration information, a quantity of transport blocks included in each of all or some transmissions of the first periodic transmission, and/or determine locations of resources occupied by the corresponding transport blocks, to detect the transport blocks. For this, refer to the foregoing description.

S407: The second UE sends feedback information to the first UE. Correspondingly, the first UE receives the feedback information from the second UE.

For example, if the second UE successfully receives a transport block, the second UE may feed back an ACK for the transport block. If the second UE fails to receive (or fails to decode) a transport block, the second UE may feed back a NACK for the transport block. The ACK/NACK is sent, for example, by using a physical sidelink feedback channel (physical sidelink feedback channel, PSFCH). For example, a black block in FIG. 6A, FIG. 6B, FIG. 7, or FIG. 8 represents a PSFCH. An arrow corresponding to the black block points to a resource used to send the periodic service, and indicates that a transport block sent on the resource fails to be received, or indicates that the PSFCH corresponds to the transport block.

If the feedback information is a NACK, S408 may be performed. If the feedback information is an ACK, S408 does not need to be performed, and the procedure ends.

S408: The first UE retransmits a second transport block. Correspondingly, the second UE receives the retransmitted second transport block from the first UE.

For example, if the second UE fails to receive the second transport block and sends a NACK to the first UE, the first UE may retransmit the second transport block. Alternatively, if the first UE further sends the first SCI in a first time unit associated with a transmission time unit for initially transmitting the second transport block, and/or further sends the second SCI in a second time unit associated with the transmission time unit for initially transmitting the second transport block, and the second UE fails to receive or decode the first SCI and/or the second SCI, the first UE may also fail to receive the second transport block, and the first UE may also retransmit the first SCI and/or the second SCI and/or the second transport block. Whether a transport block needs to be retransmitted depends on whether the transport block has been correctly received by the second UE. Therefore, the first UE cannot determine in advance whether retransmission needs to be performed or a quantity of times for which retransmission needs to be performed, and cannot determine in advance a quantity of resources that need to be reserved for retransmission. Therefore, in this embodiment of this application, a resource configured in each first cycle in the first configuration may be used for initial transmission of a transport block. If a transport block needs to be retransmitted, the first UE may dynamically select, based on feedback information of the second UE, a resource used for retransmission.

The second UE may monitor a PSCCH within first duration after a time domain resource unit in which the PSFCH corresponding to the second transport block is located. The PSCCH is associated with the retransmitted second transport block. For example, the PSCCH may schedule the retransmitted second transport block. Therefore, the second UE can implement blind detection on the retransmitted second transport block by monitoring the PSCCH. For example, a range of the first duration is [*T_{now}*+*Tₘᵢₙ*, *T_{now}*+*Tₘₐₓ*]*. T_{now}* represents a slot in which the PSFCH corresponding to the second transport block is located. *Tₘᵢₙ* and/or *Tₘₐₓ* may be determined by the second UE, for example, determined by the second UE based on a capability of the second UE. Alternatively, *Tₘᵢₙ* and/or *Tₘₐₓ* may be configured by the first UE, and the first UE may send *Tₘᵢₙ* and/or *Tₘₐₓ* to the second UE. Alternatively, *Tₘᵢₙ* and/or *Tₘₐₓ* may be configured by the network device, and the network device may send *Tₘᵢₙ* and/or *Tₘₐₓ* to the first UE and the second UE. Alternatively, *Tₘᵢₙ* and/or *Tₘₐₓ* may be predefined by using a protocol.

S401 and S404 to S408 are all optional steps.

In this embodiment of this application, for example, the first periodic service (or referred to as the first periodic transmission) includes the M transmissions, the M transmissions may correspond to the P second time units, and the second time unit may be used to send the second SCI. The first terminal device may send the second SCI in the N second time units, and does not need to send the second SCI in all the P second time units. In other words, the first terminal device does not need to send SCI (the first SCI and/or the second SCI) in each time unit corresponding to the first periodic service. For the second terminal device, a process of decoding the SCI is reduced, so that power consumption of the second terminal device can be reduced. In addition, because a quantity of pieces of the SCI sent by the first terminal device is reduced, transmission overheads can also be reduced.

FIG. 9 is a schematic diagram of a structure of a communication apparatus according to an embodiment of this application. The communication apparatus 900 may be the first UE or a circuit system of the first UE in the embodiment shown in FIG. 4, and is configured to implement the method corresponding to the first UE in the foregoing method embodiment. For a specific function, refer to the descriptions in the foregoing method embodiment. Alternatively, the communication apparatus 900 may be the second UE or a circuit system of the second UE in the embodiment shown in FIG. 4, and is configured to implement the method corresponding to the second UE in the foregoing method embodiment. For a specific function, refer to the descriptions in the foregoing method embodiment. For example, a circuit system is a chip system.

The communication apparatus 900 includes one or more processors 901. The processor 901 may also be referred to as a processing unit, and may implement a specific control function. The processor 901 may be a general-purpose processor, a dedicated processor, or the like. For example, the processor 901 includes a baseband processor, a central processing unit, or the like. The baseband processor may be configured to process a communication protocol and communication data. The central processing unit may be configured to: control the communication apparatus 900, execute a software program, and/or process data. Different processors may be independent components, or may be disposed in one or more processing circuits, for example, integrated into one or more application-specific integrated circuits.

Optionally, the communication apparatus 900 includes one or more memories 902, configured to store instructions 904. The instructions 904 may be run on the processor, so that the communication apparatus 900 performs the method described in the foregoing method embodiment. Optionally, the memory 902 may further store data. The processor and the memory may be separately disposed, or may be integrated together.

Optionally, the communication apparatus 900 may include instructions 903 (which may also be referred to as code or a program sometimes), and the instructions 903 may be run on the processor, so that the communication apparatus 900 performs the method described in the foregoing embodiment. The processor 901 may store data.

Optionally, the communication apparatus 900 may further include a transceiver 905 and an antenna 906. The transceiver 905 may be referred to as a transceiver unit, a transceiver, a transceiver circuit, a transceiver, an input/output interface, or the like, and is configured to implement a transceiver function of the communication apparatus 900 by using the antenna 906.

Optionally, the communication apparatus 900 may further include one or more of the following components: a wireless communication module, an audio module, an external memory interface, an internal memory, a universal serial bus (universal serial bus, USB) interface, a power management unit, an antenna, a speaker, a microphone, an input/output module, a sensor module, a motor, a camera, a display, and the like. It may be understood that, in some embodiments, the communication apparatus 900 may include more or fewer components, or some components are integrated, or some components are split. These components may be implemented by hardware, software, or a combination of software and hardware.

The processor 901 and the transceiver 905 that are described in this embodiment of this application may be implemented on an integrated circuit (integrated circuit, IC), an analog IC, a radio frequency integrated circuit (radio frequency identification, RFID), a mixed-signal IC, an application-specific integrated circuit (application-specific integrated circuit, ASIC), a printed circuit board (printed circuit board, PCB), an electronic device, or the like. The communication apparatus that implements the communication apparatus described in this specification may be an independent device (for example, an independent integrated circuit, or a mobile phone), or may be a part of a larger device (for example, a module that may be embedded in another device). For details, refer to the foregoing descriptions of the terminal device and the network device. Details are not described herein again.

An embodiment of this application provides a terminal device. The terminal device may be used in the foregoing embodiments. The terminal device includes corresponding means (means), units, and/or circuits for implementing the function of the first UE in the embodiment shown in FIG. 4, or the terminal device includes corresponding means (means), units, and/or circuits for implementing the function of the second UE in the embodiment shown in FIG. 4. For example, the terminal device includes a transceiver module, configured to support the terminal device in implementing a transceiver function, and a processing module, configured to support the terminal device in processing a signal.

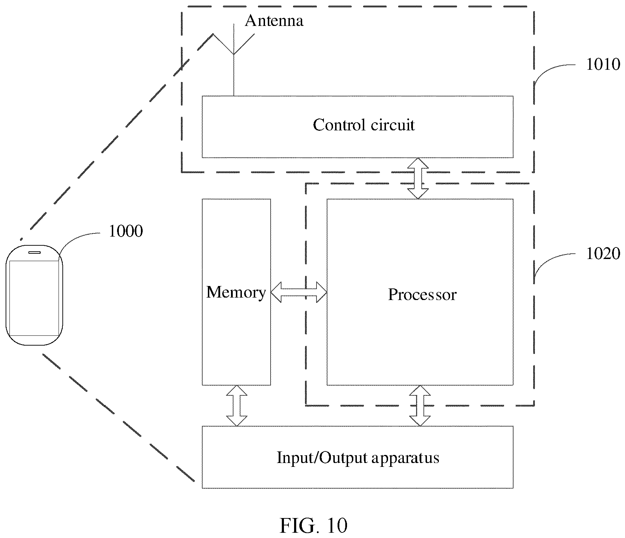

FIG. 10 is a schematic diagram of a structure of a terminal device according to an embodiment of this application.

The terminal device 1000 is applicable to the architecture shown in FIG. 3A or FIG. 3B. For ease of description, FIG. 10 shows only main components of the terminal device 1000. As shown in FIG. 10, the terminal device 1000 includes a processor, a memory, a control circuit, an antenna, and an input/output apparatus. The processor is mainly configured to: process a communication protocol and communication data, control the entire terminal device 1000, execute a software program, and process data of the software program. The memory is mainly configured to store the software program and the data. The control circuit is mainly configured to: perform conversion between a baseband signal and a radio frequency signal, and process the radio frequency signal. The antenna is mainly configured to receive and send radio frequency signals in a form of an electromagnetic wave. The input/output apparatus, such as a touchscreen, a display, a microphone, or a keyboard, is mainly configured to: receive data input by a user and output data to the user.

A person skilled in the art may understand that, for ease of description, FIG. 10 shows only one memory and one processor. In some embodiments, the terminal device 1000 may include a plurality of processors and a plurality of memories. The memory may also be referred to as a storage medium, a storage device, or the like. This is not limited in this embodiment of this application.

In an example, the antenna and the control circuit that have a transceiver function may be considered as a transceiver unit 1010 of the terminal device 1000, and the processor that has a processing function may be considered as a processing unit 1020 of the terminal device 1000. As shown in FIG. 10, the terminal device 1000 includes the transceiver unit 1010 and the processing unit 1020. The transceiver unit may also be referred to as a transceiver, a transceiver, a transceiver apparatus, or the like. Optionally, a component that is configured to implement a receiving function and that is in the transceiver unit 1010 may be considered as a receiving unit, and a component that is configured to implement a sending function and that is in the transceiver unit 1010 may be considered as a sending unit. That is, the transceiver unit 1010 includes the receiving unit and the sending unit. For example, the receiving unit may also be referred to as a receiver, a receiver, a receiver circuit, or the like, and the sending unit may be referred to as a transmitter, a transmitter, a transmitter circuit, or the like.

A person of ordinary skill in the art may be aware that, in combination with the examples described in embodiments disclosed in this specification, units and steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiments are merely examples. For example, the unit division is merely logical function division. The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing computer-readable storage medium may be any usable medium that can be accessed by a computer. The following is used as an example but is not used as a limitation: The computer-readable medium may include: a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, or another optical disc storage or magnetic disk storage medium, or another magnetic storage device, or any other medium that can be used to carry or store expected program code in a form of an instruction or a data structure and that can be accessed by the computer. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

Embodiment 1. A communication method, applied to a first terminal device, where the method includes:
sending first sidelink control information SCI in N first time units, where the first SCI indicates first configuration information, the first configuration information indicates a resource of a first periodic transmission, the resource of the first periodic transmission includes a time domain resource and/or a frequency domain resource, the first periodic transmission includes M transmissions, a transmission cycle of the first periodic transmission is a first cycle, the M transmissions correspond to P transmission time units, N is an integer greater than or equal to 1, M is an integer less than or equal to P, and P is an integer greater than N; and
sending, in N second time units, second SCI associated with the first SCI, where the first SCI sent in the N first time units and the second SCI sent in the N second time units are used to schedule the M transmissions.

Embodiment 2. The method according to Embodiment 1, where the first SCI or the second SCI further indicates an index of the first periodic transmission.

Embodiment 3. The method according to Embodiment 1 or 2, where the first SCI or the second SCI further indicates HARQ information of the first periodic transmission.

Embodiment 4. The method according to any one of Embodiments 1 to 3, where the method further includes:
sending fifth configuration information, where the fifth configuration information is used to configure the index and/or the HARQ information of the first periodic transmission.

Embodiment 5. The method according to any one of Embodiments 1 to 4, where the first SCI or the second SCI indicates that the first configuration information is valid or is no longer valid or is invalid.

Embodiment 6. The method according to any one of Embodiments 1 to 5, where the second SCI further indicates a source address and a destination address that are associated with a service of the first periodic transmission.

Embodiment 7: The method according to any one of Embodiments 1 to 6, where
an i^{th} second time unit in the N second time units is a time unit for sending one transport block in the M transmissions, and i is any integer from 0 to N-1; or
a first time offset exists between the i^{th} second time unit in the N second time units and a latest sending time unit of a transport block, i is any integer from 0 to N-1, the latest sending time unit of the transport block is later than the i^{th} second time unit, and the transport block is one transport block in the M transmissions.

Embodiment 8: The method according to any one of Embodiments 1 to 7, where
the first time unit is the same as the second time unit; or
a second time offset exists between an i^{th} first time unit and the i^{th} second time unit, and the second time offset is indicated by the first SCI, or is predefined or preconfigured.

Embodiment 9. The method according to any one of Embodiments 1 to 8, where the method further includes:
sending third SCI in K first time units, where the K first time units are associated with K transport blocks in the M transmissions, the third SCI indicates second configuration information, the K transport blocks are transport blocks in the M transmissions other than N transport blocks, and a j^{th} transport block in the N transport blocks is a transport block that occurs in a j^{th} second time unit in the N second time units in the M transmissions, or a transport block that most closely follows the j^{th} second time unit in the N second time units, where
the second configuration information is the same as all or some information included in first configuration information indicated by first SCI sent most recently before the third SCI is sent, and K is a positive integer less than or equal to P-N.

Embodiment 10: The method according to Embodiment 9, where the method further includes:
skipping sending second SCI associated with the third SCI.

Embodiment 11. The method according to any one of Embodiments 1 to 10, where the method further includes:
skipping sending the second SCI in P-N second time units, where the P-N second time units are associated with P-N transport blocks in the M transmissions other than the N transport blocks, and the j^{th} transport block in the N transport blocks is a transport block that occurs in the j^{th} second time unit in the N second time units in the M transmissions, or a transport block that most closely follows the j^{th} second time unit in the N second time units.

Embodiment 12: The method according to Embodiment 11, where the method further includes:
sending a first transport block of the periodic transmission on a first resource, where the first transport block is one of the P-N transport blocks, the first resource includes a time domain resource and/or a frequency domain resource, and the first resource is determined based on latest first SCI before the first resource.

Embodiment 13. The method according to any one of Embodiments 1 to 12, where the first SCI further indicates whether to send the second SCI associated with the first SCI.

Embodiment 14. The method according to any one of Embodiments 1 to 13, where the method further includes:
sending third configuration information, where the third configuration information is used to configure a second cycle, the second cycle is a cycle for a receive end of the first periodic transmission to detect the first SCI, and the second cycle is greater than or equal to the first cycle.

Embodiment 15. A communication method, applied to a second terminal device, where the method includes:
detecting first sidelink control information SCI in N first time units, where the first SCI indicates first configuration information, the first configuration information indicates a resource of a first periodic transmission, the resource of the first periodic transmission includes a time domain resource and/or a frequency domain resource, the first periodic transmission includes M transmissions, a transmission cycle of the first periodic transmission is a first cycle, the M transmissions correspond to P transmission time units, N is an integer greater than or equal to 1, M is an integer less than or equal to P, and P is an integer greater than N; and
detecting, in N second time units, second SCI associated with the first SCI, where the first SCI sent in the N first time units and the second SCI sent in the N second time units are used to schedule the M transmissions.

Embodiment 16. The method according to Embodiment 15, where the first SCI or the second SCI further indicates an index of the first periodic transmission.

Embodiment 17. The method according to Embodiment 16, where the first SCI or the second SCI further indicates HARQ information of the first periodic transmission.

Embodiment 18: The method according to Embodiment 16 or 17, where the method further includes:
receiving fifth configuration information, where the fifth configuration information is used to configure the index and/or the HARQ information of the first periodic transmission.

Embodiment 19. The method according to any one of Embodiments 15 to 18, where the first SCI or the second SCI indicates that the first configuration information is valid or is no longer valid or is invalid.

Embodiment 20. The method according to any one of Embodiments 15 to 19, where the second SCI further indicates a source address and a destination address that are associated with a service of the first periodic transmission.

Embodiment 21: The method according to any one of Embodiments 15 to 20, where
an i^{th} second time unit in the N second time units is a time unit for sending one transport block in the M transmissions, and i is any integer from 0 to N-1; or
a first time offset exists between the i^{th} second time unit in the N second time units and a latest sending time unit of a transport block, i is any integer from 0 to N-1, the latest sending time unit of the transport block is later than the i^{th} second time unit, and the transport block is one transport block in the M transmissions.

Embodiment 22: The method according to any one of Embodiments 15 to 21, where
the first time unit is the same as the second time unit; or
a second time offset exists between an i^{th} first time unit and the i^{th} second time unit, and the second time offset is indicated by the first SCI, or is predefined or preconfigured.

Embodiment 23. The method according to any one of Embodiments 15 to 22, where the method further includes:
skip detecting third SCI in K first time units, where the K first time units are associated with K transport blocks in the M transmissions, the third SCI indicates second configuration information, the K transport blocks are transport blocks in the M transmissions other than N transport blocks, and a j^{th} transport block in the N transport blocks is a transport block that occurs in a j^{th} second time unit in the N second time units in the M transmissions, or a transport block that most closely follows the j^{th} second time unit in the N second time units, where
the second configuration information is the same as all or some information included in first configuration information indicated by first SCI sent most recently before the third SCI is sent, and K is a positive integer less than or equal to P-N.

Embodiment 24. The method according to any one of Embodiments 15 to 23, where the method further includes:
skipping detecting second SCI associated with the third SCI.

Embodiment 25. The method according to any one of Embodiments 15 to 24, where the method further includes:
skipping detecting the second SCI in P-N second time units, where the P-N second time units are associated with P-N transport blocks in the M transmissions other than the N transport blocks, and the j^{th} transport block in the N transport blocks is a transport block that occurs in the j^{th} second time unit in the N second time units in the M transmissions, or a transport block that most closely follows the j^{th} second time unit in the N second time units.

Embodiment 26. The method according to any one of Embodiments 15 to 25, where the method further includes:
detecting a first transport block of the periodic transmission on a first resource, where the first transport block is one of the P-N transport blocks, the first resource includes a time domain resource and/or a frequency domain resource, and the first resource is determined based on latest first SCI before the first resource.

Embodiment 27. The method according to any one of Embodiments 15 to 26, where the first SCI further indicates whether to send the second SCI associated with the first SCI.

Embodiment 28. The method according to any one of Embodiments 15 to 27, where the method further includes:
receiving third configuration information, where the third configuration information is used to configure a second cycle, the second cycle is a cycle for a receive end of the first periodic transmission to detect the first SCI, and the second cycle is greater than or equal to the first cycle.

Embodiment 29. A communication apparatus, including a processing unit and a transceiver unit, where
the processing unit is configured to send first SCI in N first time units by using the transceiver unit, where the first SCI indicates first configuration information, the first configuration information includes a resource of a first periodic transmission, the resource of the first periodic transmission includes a time domain resource and/or a frequency domain resource, the first periodic transmission includes M transmissions, a transmission cycle of the first periodic transmission is a first cycle, the M transmissions correspond to P transmission time units, N is an integer greater than or equal to 1, M is an integer less than or equal to P, and P is an integer greater than N; and
the processing unit is further configured to send, in N second time units, second SCI associated with the first SCI by using the transceiver unit at N moments, where the first SCI sent in the N first time units and the second SCI sent in the N second time units are used to schedule the M transmissions.

Embodiment 30. The communication apparatus according to Embodiment 29, where the first SCI or the second SCI further indicates an index of the first periodic transmission.

Embodiment 31. The communication apparatus according to Embodiment 29 or 30, where the first SCI or the second SCI further indicates HARQ information of the first periodic transmission.

Embodiment 32. The communication apparatus according to any one of Embodiments 29 to 31, where the processing unit is further configured to send fifth configuration information by using the transceiver unit, where the fifth configuration information is used to configure the index and/or the HARQ information of the first periodic transmission.

Embodiment 33. The communication apparatus according to any one of Embodiments 29 to 32, where the first SCI or the second SCI indicates that the first configuration information is valid or is no longer valid or is invalid.

Embodiment 34. The communication apparatus according to any one of Embodiments 29 to 33, where the second SCI further indicates a source address and a destination address that are associated with a service of the first periodic transmission.

Embodiment 35. The communication apparatus according to any one of Embodiments 29 to 34, where
an i^{th} second time unit in the N second time units is a time unit for sending one transport block in the M transmissions, and i is any integer from 0 to N-1; or
a first time offset exists between the i^{th} second time unit in the N second time units and a latest sending time unit of a transport block, i is any integer from 0 to N-1, the latest sending time unit of the transport block is later than the i^{th} second time unit, and the transport block is one transport block in the M transmissions.

Embodiment 36. The communication apparatus according to any one of Embodiments 29 to 35, where
the first time unit is the same as the second time unit; or
a second time offset exists between an i^{th} first time unit and the i^{th} second time unit, and the second time offset is indicated by the first SCI, or is predefined or preconfigured.

Embodiment 37. The communication apparatus according to any one of Embodiments 29 to 36, where the processing unit is further configured to send third SCI in K first time units by using the transceiver unit, where the K first time units are associated with K transport blocks in the M transmissions, the third SCI indicates second configuration information, the K transport blocks are transport blocks in the M transmissions other than N transport blocks, and a j^{th} transport block in the N transport blocks is a transport block that occurs in a j^{th} second time unit in the N second time units in the M transmissions, or a transport block that most closely follows the j^{th} second time unit in the N second time units, where
the second configuration information is the same as all or some information included in first configuration information indicated by first SCI sent most recently before the third SCI is sent, and K is a positive integer less than or equal to P-N.

Embodiment 38. The communication apparatus according to Embodiment 37, where the processing unit is further configured to skip sending, by using the transceiver unit, second SCI associated with the third SCI.

Embodiment 39. The communication apparatus according to any one of Embodiments 29 to 38, where the processing unit is further configured to skip sending the second SCI in P-N second time units, where the P-N second time units are associated with P-N transport blocks in the M transmissions other than the N transport blocks, and the j^{th} transport block in the N transport blocks is a transport block that occurs in the j^{th} second time unit in the N second time units in the M transmissions, or a transport block that most closely follows the j^{th} second time unit in the N second time units.

Embodiment 40. The communication apparatus according to any one of Embodiments 29 to 39, where the processing unit is further configured to send a first transport block of the periodic transmission on a first resource by using the transceiver unit, where the first transport block is one of the P-N transport blocks, the first resource includes a time domain resource and/or a frequency domain resource, and the first resource is determined based on latest first SCI before the first resource.

Embodiment 41. The communication apparatus according to any one of Embodiments 29 to 40, where the first SCI further indicates whether to send the second SCI associated with the first SCI.

Embodiment 42. The communication apparatus according to any one of Embodiments 29 to 41, where the processing unit is further configured to send third configuration information by using the transceiver unit, where the third configuration information is used to configure a second cycle, the second cycle is a cycle for a receive end of the first periodic transmission to detect the first SCI, and the second cycle is greater than or equal to the first cycle.

Embodiment 43. A communication apparatus, including a processing unit and a transceiver unit, where
the processing unit is configured to detect first sidelink control information SCI in N first time units by using the transceiver unit, where the first SCI indicates first configuration information, the first configuration information includes a resource of a first periodic transmission, the resource of the first periodic transmission includes a time domain resource and/or a frequency domain resource, the first periodic transmission includes M transmissions, a transmission cycle of the first periodic transmission is a first cycle, the M transmissions correspond to P transmission time units, N is an integer greater than or equal to 1, M is an integer less than or equal to P, and P is an integer greater than N; and
the processing unit is further configured to detect, in N second time units, second SCI associated with the first SCI by using the transceiver unit, where the first SCI sent in the N first time units and the second SCI sent in the N second time units are used to schedule the M transmissions.

Embodiment 44. The communication apparatus according to Embodiment 43, where the first SCI or the second SCI further indicates an index of the first periodic transmission.

Embodiment 45. The communication apparatus according to Embodiment 44, where the first SCI or the second SCI further indicates HARQ information of the first periodic transmission.

Embodiment 46. The communication apparatus according to Embodiment 44 or 45, where the processing unit is further configured to send fifth configuration information by using the transceiver unit, where the fifth configuration information is used to configure the index and/or the HARQ information of the first periodic transmission.

Embodiment 47. The communication apparatus according to any one of Embodiments 43 to 46, where the first SCI or the second SCI indicates that the first configuration information is valid or is no longer valid or is invalid.

Embodiment 48. The communication apparatus according to any one of Embodiments 43 to 47, where the second SCI further indicates a source address and a destination address that are associated with a service of the first periodic transmission.

Embodiment 49. The communication apparatus according to any one of Embodiments 43 to 48, where
an i^{th} second time unit in the N second time units is a time unit for sending one transport block in the M transmissions, and i is any integer from 0 to N-1; or
a first time offset exists between the i^{th} second time unit in the N second time units and a latest sending time unit of a transport block, i is any integer from 0 to N-1, the latest sending time unit of the transport block is later than the i^{th} second time unit, and the transport block is one transport block in the M transmissions.

Embodiment 50. The communication apparatus according to any one of Embodiments 43 to 49, where
the first time unit is the same as the second time unit; or
a second time offset exists between an i^{th} first time unit and the i^{th} second time unit, and the second time offset is indicated by the first SCI, or is predefined or preconfigured.

Embodiment 51. The communication apparatus according to any one of Embodiments 43 to 50, where the processing unit is further configured to skip detecting third SCI in K first time units by using the transceiver unit, where the K first time units are associated with K transport blocks in the M transmissions, the third SCI indicates second configuration information, the K transport blocks are transport blocks in the M transmissions other than N transport blocks, and a j^{th} transport block in the N transport blocks is a transport block that occurs in a j^{th} second time unit in the N second time units in the M transmissions, or a transport block that most closely follows the j^{th} second time unit in the N second time units, where
the second configuration information is the same as all or some information included in first configuration information indicated by first SCI sent most recently before the third SCI is sent, and K is a positive integer less than or equal to P-N.

Embodiment 52. The communication apparatus according to any one of Embodiments 43 to 51, where the processing unit is further configured to skip detecting, by using the transceiver unit, second SCI associated with the third SCI.

Embodiment 53. The communication apparatus according to any one of Embodiments 43 to 52, where the processing unit is further configured to skip detecting the second SCI in P-N second time units, where the P-N second time units are associated with P-N transport blocks in the M transmissions other than the N transport blocks, and the j^{th} transport block in the N transport blocks is a transport block that occurs in the j^{th} second time unit in the N second time units in the M transmissions, or a transport block that most closely follows the j^{th} second time unit in the N second time units.

Embodiment 54. The communication apparatus according to any one of Embodiments 43 to 53, where the processing unit is further configured to detect a first transport block of the periodic transmission on a first resource by using the transceiver unit, where the first transport block is one of the P-N transport blocks, the first resource includes a time domain resource and/or a frequency domain resource, and the first resource is determined based on latest first SCI before the first resource.

Embodiment 55. The communication apparatus according to any one of Embodiments 43 to 54, where the first SCI further indicates whether to send the second SCI associated with the first SCI.

Embodiment 56. The communication apparatus according to any one of Embodiments 43 to 55, where the processing unit is further configured to receive third configuration information by using the transceiver unit, where the third configuration information is used to configure a second cycle, the second cycle is a cycle for a receive end of the periodic service to detect the first SCI, and the second cycle is greater than or equal to the first cycle.

Embodiment 57. An apparatus, including units configured to perform the method described in any embodiment of this application.

Embodiment 58. A computer program product, where the computer program product includes a computer program, and when the computer program is run on a computer, the computer is enabled to perform the method according to any one of Embodiments 1 to 14, or the computer is enabled to perform the method according to any one of Embodiments 15 to 28.

## Claims

1. A communication method, applied to a first terminal device, wherein the method comprises:
sending first sidelink control information SCI in N first time units, wherein the first SCI indicates first configuration information, the first configuration information indicates a resource of a first periodic transmission, the resource of the first periodic transmission comprises a time domain resource and/or a frequency domain resource, the first periodic transmission comprises M transmissions, a transmission cycle of the first periodic transmission is a first cycle, the M transmissions correspond to P transmission time units, N is an integer greater than or equal to 1, M is an integer less than or equal to P, and P is an integer greater than N; and
sending, in N second time units, second SCI associated with the first SCI, wherein the first SCI sent in the N first time units and the second SCI sent in the N second time units are used to schedule the M transmissions.

2. The method according to claim 1, wherein the first SCI or the second SCI further indicates an index of the first periodic transmission.

3. The method according to claim 2, wherein the first SCI or the second SCI further indicates HARQ information of the first periodic transmission.

4. The method according to any one of claims 1 to 3, wherein the first SCI or the second SCI indicates that the first configuration information is valid or is no longer valid or is invalid.

5. The method according to any one of claims 1 to 4, wherein the second SCI further indicates a source address and a destination address that are associated with a service of the first periodic transmission.

6. The method according to any one of claims 1 to 5, wherein
an i^{th} second time unit in the N second time units is a time unit for sending one transport block in the M transmissions, and i is any integer from 0 to N-1; or
a first time offset exists between the i^{th} second time unit in the N second time units and a latest sending time unit of a transport block, i is any integer from 0 to N-1, the latest sending time unit of the transport block is later than the i^{th} second time unit, and the transport block is one transport block in the M transmissions.

7. The method according to any one of claims 1 to 6, wherein
the first time unit is the same as the second time unit; or
a second time offset exists between an i^{th} first time unit and the i^{th} second time unit, and the second time offset is indicated by the first SCI, or is predefined or preconfigured.

8. The method according to any one of claims 1 to 7, wherein the method further comprises:
sending third SCI in K first time units, wherein the K first time units are associated with K transport blocks in the M transmissions, the third SCI indicates second configuration information, the K transport blocks are transport blocks in the M transmissions other than N transport blocks, and a j^{th} transport block in the N transport blocks is a transport block that occurs in a j^{th} second time unit in the N second time units in the M transmissions, or a transport block that most closely follows the j^{th} second time unit in the N second time units, wherein
the second configuration information is the same as all or some information comprised in first configuration information indicated by first SCI sent most recently before the third SCI is sent, and K is a positive integer less than or equal to P-N.

9. The method according to claim 8, wherein the method further comprises:
skipping sending second SCI associated with the third SCI.

10. The method according to any one of claims 1 to 9, wherein the method further comprises:
skipping sending the second SCI in P-N second time units, wherein the P-N second time units are associated with P-N transport blocks in the M transmissions other than the N transport blocks, and the j^{th} transport block in the N transport blocks is a transport block that occurs in the j^{th} second time unit in the N second time units in the M transmissions, or a transport block that most closely follows the j^{th} second time unit in the N second time units.

11. The method according to claim 10, wherein the method further comprises:
sending a first transport block of the periodic transmission on a first resource, wherein the first transport block is one of the P-N transport blocks, the first resource comprises a time domain resource and/or a frequency domain resource, and the first resource is determined based on latest first SCI before the first resource.

12. The method according to any one of claims 1 to 11, wherein the first SCI further indicates whether to send the second SCI associated with the first SCI.

13. The method according to any one of claims 1 to 12, wherein the method further comprises:
sending third configuration information, wherein the third configuration information is used to configure a second cycle, the second cycle is a cycle for a receive end of the first periodic transmission to detect the first SCI, and the second cycle is greater than or equal to the first cycle.

14. The method according to any one of claims 1 to 13, wherein the method further comprises:
sending fourth configuration information, wherein the fourth configuration information indicates a quantity of transport blocks comprised in each transmission of the first periodic transmission, and/or a resource that is of the first periodic transmission and that is occupied by a transport block comprised in each transmission.

15. A communication method, comprising:
detecting first sidelink control information SCI in N first time units, wherein the first SCI indicates first configuration information, the first configuration information indicates a resource of a first periodic transmission, the resource of the first periodic transmission comprises a time domain resource and/or a frequency domain resource, the first periodic transmission comprises M transmissions, a transmission cycle of the first periodic transmission is a first cycle, the M transmissions correspond to P transmission time units, N is an integer greater than or equal to 1, M is an integer less than or equal to P, and P is an integer greater than N; and
detecting, in N second time units, second SCI associated with the first SCI, wherein the first SCI sent in the N first time units and the second SCI sent in the N second time units are used to schedule the M transmissions.

16. The method according to claim 15, wherein the first SCI or the second SCI further indicates an index of the first periodic transmission.

17. The method according to claim 16, wherein the first SCI or the second SCI further indicates HARQ information of the first periodic transmission.

18. The method according to any one of claims 15 to 17, wherein the first SCI or the second SCI indicates that the first configuration information is valid or is no longer valid or is invalid.

19. The method according to any one of claims 15 to 18, wherein the second SCI further indicates a source address and a destination address that are associated with a service of the first periodic transmission.

20. The method according to any one of claims 15 to 19, wherein
an i^{th} second time unit in the N second time units is a time unit for sending one transport block in the M transmissions, and i is any integer from 0 to N-1; or
a first time offset exists between the i^{th} second time unit in the N second time units and a latest sending time unit of a transport block, i is any integer from 0 to N-1, the latest sending time unit of the transport block is later than the i^{th} second time unit, and the transport block is one transport block in the M transmissions.

21. The method according to any one of claims 15 to 20, wherein
the first time unit is the same as the second time unit; or
a second time offset exists between an i^{th} first time unit and the i^{th} second time unit, and the second time offset is indicated by the first SCI, or is predefined or preconfigured.

22. The method according to any one of claims 15 to 21, wherein the method further comprises:
skip detecting third SCI in K first time units, wherein the K first time units are associated with K transport blocks in the M transmissions, the third SCI indicates second configuration information, the K transport blocks are transport blocks in the M transmissions other than N transport blocks, and a j^{th} transport block in the N transport blocks is a transport block that occurs in a j^{th} second time unit in the N second time units in the M transmissions, or a transport block that most closely follows the j^{th} second time unit in the N second time units, wherein
the second configuration information is the same as all or some information comprised in first configuration information indicated by first SCI sent most recently before the third SCI is sent, and K is a positive integer less than or equal to P-N.

23. The method according to claim 22, wherein the method further comprises:
skipping detecting second SCI associated with the third SCI.

24. The method according to any one of claims 15 to 23, wherein the method further comprises:
skipping detecting the second SCI in P-N second time units, wherein the P-N second time units are associated with P-N transport blocks in the M transmissions other than the N transport blocks, and the j^{th} transport block in the N transport blocks is a transport block that occurs in the j^{th} second time unit in the N second time units in the M transmissions, or a transport block that most closely follows the j^{th} second time unit in the N second time units.

25. The method according to claim 24, wherein the method further comprises:
detecting a first transport block of the periodic transmission on a first resource, wherein the first transport block is one of the P-N transport blocks, the first resource comprises a time domain resource and/or a frequency domain resource, and the first resource is determined based on latest first SCI before the first resource.

26. The method according to any one of claims 15 to 25, wherein the first SCI further indicates whether to send the second SCI associated with the first SCI.

27. The method according to any one of claims 15 to 26, wherein the method further comprises:
receiving third configuration information, wherein the third configuration information is used to configure a second cycle, the second cycle is a cycle for a receive end of the first periodic transmission to detect the first SCI, and the second cycle is greater than or equal to the first cycle.

28. The method according to any one of claims 15 to 27, wherein the method further comprises:
receiving fourth configuration information, wherein the fourth configuration information indicates a quantity of transport blocks comprised in each transmission of the first periodic transmission, and/or a resource that is of the first periodic transmission and that is occupied by a transport block comprised in each transmission.

29. A communication device, comprising:
one or more processors;
one or more memories; and
one or more computer programs, wherein the one or more computer programs are stored in the one or more memories, the one or more computer programs comprise instructions, and when the instructions are executed by the one or more processors of the communication device, the communication device is enabled to perform the method according to any one of claims 1 to 14, or the communication device is enabled to perform the method according to any one of claims 15 to 28.

30. A computer-readable storage medium, wherein the computer-readable storage medium is configured to store a computer program, and when the computer program is run on a computer, the computer is enabled to perform the method according to any one of claims 1 to 14, or the computer is enabled to perform the method according to any one of claims 15 to 28.
